(19) 

Europäisches Patentamt

European Patent Office

Office européen des brevets

(11)  **EP 4 692 550 A1**

(12)  **EUROPÄISCHE PATENTANMELDUNG**

(43) Veröffentlichungstag:
**11.02.2026  Patentblatt 2026/07**

(21) Anmeldenummer: **25193236.4**

(22) Anmeldetag: **31.07.2025**

(51) Internationale Patentklassifikation (IPC):
**F04C 2/10** *(2006.01)*    **F04C 11/00** *(2006.01)*
**F04C 15/06** *(2006.01)*

(52) Gemeinsame Patentklassifikation (CPC):
**F04C 2/102; F04C 11/001; F04C 15/06;**
F04C 2250/20

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **05.08.2024  DE 102024122296**

(71) Anmelder: **Schwäbische Hüttenwerke
Automotive GmbH
73433 Aalen (DE)**

(72) Erfinder: **Dr. Meinig, Uwe
88348 Bad Saulgau (DE)**

(74) Vertreter: **SSM Sandmair
Patentanwälte Rechtsanwalt
Partnerschaft mbB
Joseph-Wild-Straße 20
81829 München (DE)**

(54)  **ZAHNRADPUMPE MIT MEHREREN INNENACHSIGEN ZAHNRADSÄTZEN**

(57)    Eine Zahnradpumpe umfasst
ein Pumpengehäuse (1) mit einem Gehäuseeinlass (2), einem Gehäuseauslass (3), einer mit dem Gehäuseeinlass und dem Gehäuseauslass verbundenen ersten Förderkammer (4) und einer zweiten Förderkammer (5), eine Antriebswelle (40),
einen mit der Antriebswelle (40) gekoppelten und in der ersten Förderkammer (4) drehbaren innenachsigen ersten Rotorsatz (11), der einen außenverzahnten ersten Innenrotor (12) und einen innenverzahnten ersten Außenrotor (13) aufweist, die in einem ersten Zahneingriff sind, um ein Fluid vom Gehäuseeinlass (2) zum Gehäuseauslass (3) zu fördern, und

einen mit der Antriebswelle (40) gekoppelten und in der zweiten Förderkammer (5) drehbaren innenachsigen zweiten Rotorsatz (14), der einen außenverzahnten zweiten Innenrotor (15) und einen innenverzahnten zweiten Außenrotor (16) aufweist, die in einem zweiten Zahneingriff sind, um Fluid zu fördern, wobei
eine axiale Eingriffslänge des ersten Zahneingriffs wenigstens dem 0,7-fachen des Außendurchmessers des ersten Außenrotors (13)
und/oder
eine axiale Eingriffslänge des zweiten Zahneingriffs wenigstens dem 0,7-fachen des Außendurchmessers des zweiten Außenrotors (16) entspricht.

Fig. 1

EP 4 692 550 A1

## EP 4 692 550 A1

**Beschreibung**

Die Erfindung betrifft eine Zahnradpumpe mit innenachsigen Zahnradsätzen zur Förderung eines hydraulischen Fluids, beispielsweise eines Kühlfluids und/oder Schmierfluids. In vorteilhaften Verwendungen dient sie der Förderung einer Kühlflüssigkeit zur Kühlung einer Traktionsbatterie eines Elektrofahrzeugs oder Elektro-Verbrenner-Hybridfahrzeugs. Die Zahnradpumpe eignet sich aber auch zur Förderung höherviskoser Fluide, wie etwa zur Förderung von Motorschmieröl und hier insbesondere für den Kaltanlauf eines Fahrzeugmotors.

In den Teilsystemen des Antriebsstrangs von verbrennungsmotorisch und/oder elektrisch angetriebenen Fahrzeugen kommen zahlreiche Pumpen für gasförmige und flüssige Medien zum Einsatz, die in zunehmendem Maße bedarfsgerecht elektrisch drehzahlvariabel betrieben werden. Ein verbreiteter Einsatzbereich für elektrische Pumpen sind Kühlmedienpumpen, beispielsweise zur Förderung von Wasser-Glykol-Mischungen, Ölen oder in einzelnen Anwendungen auch dielektrischen Kühlflüssigkeiten. Die Pumpen werden als Verdrängerpumpen, wie etwa Zahnrad- und Flügelzellenpumpen, und auch als Strömungsmaschinen, beispielsweise Kreiselpumpen und Seitenkanalpumpen, ausgeführt. Ein Betrieb kleinerer Pumpen mit hohen Bordnetzspannungen von mehr als 48 V ist unter Sicherheitsgesichtspunkten mit wesentlichen Aufwänden und Kosten verbunden. Andererseits möchten die Automobilhersteller unter Kostengesichtspunkten Fahrzeugkonzepte vermeiden, die neben einer Bordnetzspannung von 400 oder 800 V für den Traktionsmotor und 12 V für kleinere Verbraucher, wie etwa Beleuchtungen, noch ein drittes Bordnetzspannungsniveau von z.B. 48 V benötigen. Deshalb werden elektrische Nebenaggregate bis zu einer Leistung von ca. 600 W, wie beispielsweise elektrisch angetriebene Pumpen, in Personenkraftwagen trotz der in den Versorgungsleitungen entstehenden verhältnismäßig hohen Strömen von ca. 50 A üblicherweise weiterhin über das seit vielen Jahrzehnten verbreitete, für kleine Leistungen auch bei E-Fahrzeugen eingesetzte 12-V-Bordnetz betrieben.

Um bei diesen Pumpen trotz einer Limitierung der Stromaufnahmen auf ca. 50 A möglichst hohe Förderleistungen zu verwirklichen, wird der Einsatz von Pumpen mit überdurchschnittlich hohen Gesamtwirkungsgraden angestrebt. Höhere Gesamtwirkungsgrade ermöglichen eine kleinere Dimensionierung des elektrischen Antriebsmotors der Pumpe, zumeist ein bürstenloser Gleichstrommotor (BLDC-Motor), und der Ansteuerungsplatine (PCBA) für den Motor. Dies reduziert neben dem Energieeinsatz für den Antrieb auch die Kosten und den Bauraumbedarf der Pumpe.

Ein messtechnischer Vergleich unterschiedlicher Pumpenkonzepte mit vergleichbarer Förderleistung zeigt, dass mit zweckmäßig ausgeführten zweispindeligen und dreispindeligen Schraubenspindelpumpen gegenüber konventionellen Zahnrad-, Flügelzellen- und Kreiselpumpen deutliche Vorteile in den Gesamtwirkungsgraden, insbesondere bei hohen Drehzahlen und hohen Förderleistungen der Pumpe, d.h. in den typischen Bereichen des Nennauslegungspunkts, erreicht werden können. Ein weiterer Gesichtspunkt sind die guten akustischen Eigenschaften von Schraubenspindelpumpen, die dieses Pumpenkonzept insbesondere für den Einsatz in Elektrofahrzeugen mit niedrigen Grundschallpegeln interessant machen.

Ein wesentlicher konzeptioneller Nachteil von Schraubenspindelpumpen ist die gegenüber anderen Verdrängerpumpen und Kreiselpumpen hinsichtlich Präzisionsanforderungen an die Geometrie der Spindeln aufwändige Bauart. Die großen, auf Linienberührung beruhenden Dichtspaltlängen zwischen den Förderzellen erfordern die Einhaltung sehr enger Bauteiltoleranzen der Spindeln zueinander und zu den zugehörigen Gehäusebohrungen. Zudem lassen sich Schraubenspindelpumpen im Sinne eines Serienbaukastenkonzepts nur aufwändig skalieren, da bei gegebenem Drehzahlniveau des Antriebsmotors eine Anpassung des Fördervolumenstroms eine aufwändige Neuauslegung der Spindeln, verbunden mit erheblichen Werkzeugkosten und entsprechenden Anpassungen am Pumpengehäuse erfordert.

Im Vergleich hierzu können Zahnradpumpen hinsichtlich des spezifischen Fördervolumens (Fördervolumen pro Umdrehung) verhältnismäßig einfach beispielsweise durch Kürzen oder Verlängern der axialen Erstreckung der das Fluid fördernden Zahnräder an die jeweiligen Erfordernisse angepasst werden. Zahnradpumpen zeichnen sich auch durch ihren einfachen Aufbau und die geringe Zahl von Komponenten aus. Innenachsige Zahnradpumpen, insbesondere Zahnringpumpen, wie etwa Gerotorpumpen, können kompakt ausgeführt werden und stellen daher geringe Anforderungen an den nur begrenzt zur Verfügung stehenden Bauraum. Zudem können mehrere Zahnradsätze längs einer gemeinsamen Antriebswelle angeordnet werden.

So offenbart die DE 10 2019 118 708 A1 eine Innenzahnradpumpe für die Druckversorgung eines Verbrauchers, wofür Bremssysteme, Getriebesteuerungen, Robotik und Sondermaschinen genannt werden. Die Pumpe umfasst zwei innenachsige Zahnradsätze, jeweils mit Sichel, die längs einer gemeinsamen Antriebswelle angeordnet sind und von einem integrierten Elektromotor über die Antriebswelle angetrieben werden. Die Pumpe ist zweistufig, d.h. einer der Zahnradsätze folgt im Förderstrom auf den anderen.

Aus der DE 33 07 790 A1 ist eine Zahnringpumpe mit längs einer gemeinsamen Antriebswelle angeordneten Zahnradsätzen vom Gerotortyp bekannt. Einer der Zahnradsätze fördert einen großen Volumenstrom bei geringem Druck, während ein anderer einen demgegenüber kleineren Volumenstrom bei größerem Druck fördert. Die Zahnradsätze unterscheiden sich entsprechend im Durchmesser und in der Länge.

Die DE 10 2021 207 694 A1 offenbart eine Zahnringpumpe (Gerotorpumpe) zur Förderung von Schmieröl mit drei Zahnradsätzen, die längs einer gemeinsamen Antriebswelle angeordnet sind und von einem Elektromotor über die Welle angetrieben werden. Der Elektromotor ist an einem Öltank außen befestigt. Die Motor- und Antriebswelle ragt in den Öltank, in dem die Zahnradsätze angeordnet sind. Dabei sind zwei Zahnradsätze im Förderstrom parallel angeordnet, um Schmieröl über einen gemeinsamen Einlass aus einem angrenzenden Trockensumpf anzusaugen und an jeweils einem eigenen Auslass in den Öltank zu fördern. Der dritte Zahnradsatz saugt Öl im Öltank an und fördert es zu einem Verbraucher. Die parallelgeschalteten Zahnradsätze sind länger als der dritte Zahnradsatz. Alle drei Zahnradsätze haben den gleichen Außendurchmesser.

Es ist eine Aufgabe der Erfindung, eine Zahnradpumpe bereitzustellen, die gegenüber herkömmlichen Verdränger- und Kreiselpumpen verbesserte Gesamtwirkungsgrade aufweist, aber im Vergleich zu Schraubenspindelpumpen geringere Anforderungen an die Bauteiltoleranzen stellt.

Eine andere Aufgabe kann in der Bereitstellung einer Pumpe gesehen werden, die eine hohe Förderleistung bei kleinen Abmessungen aufweist.

Wünschenswert ist ein Pumpenkonzept, das an unterschiedliche Förderbedarfe konstruktiv einfach anpassbar und für die Serie einfach skalierbar ist.

Eine Zahnradpumpe zur Förderung eines hydraulischen Fluids, wie die Erfindung sie betrifft, umfasst ein Pumpengehäuse mit einem Gehäuseeinlass für das Fluid, einem Gehäuseauslass für das Fluid, einer ersten Förderkammer und einer zweiten Förderkammer. Der Gehäuseeinlass ist mit einem Kammereinlass der ersten Förderkammer verbunden. Der Gehäuseauslass ist mit einem Kammerauslass der ersten Förderkammer verbunden. Die Zahnradpumpe umfasst ferner eine Antriebswelle, einen ersten Rotorsatz, der für einen Drehantrieb mit der Antriebswelle gekoppelt ist, und einen zweiten Rotorsatz, der für einen Drehantrieb ebenfalls mit der Antriebswelle gekoppelt ist. Der erste Rotorsatz (Zahnradsatz) ist in der ersten Förderkammer und der zweite Rotorsatz (Zahnradsatz) ist in der zweiten Förderkammer drehbar angeordnet. Der erste Rotorsatz und der zweite Rotorsatz sind innenachsig. Der erste Rotorsatz umfasst einen ersten Innenrotor mit einer Außenverzahnung und einen ersten Außenrotor mit einer Innenverzahnung, die mit der Außenverzahnung des ersten Innenrotors in einem Zahneingriff ist, um bei Drehantrieb des ersten Rotorsatzes Fluid vom Gehäuseeinlass in die erste Förderkammer und aus dieser zum Gehäuseauslass zu fördern. Der zweite Rotorsatz umfasst einen zweiten Innenrotor mit einer Außenverzahnung und einen zweiten Außenrotor mit einer Innenverzahnung, die mit der Außenverzahnung des zweiten Innenrotors in einem zweiten Zahneingriff ist, um bei Drehantrieb ebenfalls Fluid zu fördern.

Sind $L_1$ die axiale Eingriffslänge des ersten Zahneingriffs, $L_2$ die axiale Eingriffslänge des zweiten Zahneingriffs, $D_1$ der Außendurchmesser des ersten Außenrotors und $D_2$ der Außendurchmesser des zweiten Außenrotors, so gilt nach der Erfindung $L_1 \geq 0{,}7 \cdot D_1$ und/oder $L_2 \geq 0{,}7 \cdot D_2$.

Vorteilhafterweise gilt für den ersten Zahneingriff, d.h. im Zahneingriff des ersten Rotorsatzes, $L_1 \geq 0{,}8 \cdot D_1$ und/oder für den zweiten Zahneingriff, d.h. im Zahneingriff des zweiten Rotorsatzes, $L_2 \geq 0{,}8 \cdot D_2$.

Bei gegebenem spezifischen Fördervolumen verlängert die Erfindung im Vergleich mit bekannten Pumpen die Eingriffslänge des ersten Zahneingriffs und/oder die Eingriffslänge des zweiten Zahneingriffs im Verhältnis zum Außendurchmesser des Außenrotors des jeweiligen Rotorsatzes. Durch Verringerung des Außendurchmessers und Verlängerung der Eingriffslänge kann bei gegebenem spezifischen Fördervolumen die Reibleistung über den Umfang des jeweiligen Außenrotors und an den Stirnflächen des jeweiligen Rotorsatzes reduziert und der Gesamtwirkungsgrad des jeweiligen Rotorsatzes und damit der Zahnradpumpe insgesamt erhöht werden.

Andererseits ist es vorteilhaft, wenn eine oder mehrere der folgenden Relationen gelten:

$$L_1 \leq 1{,}5 \cdot D_1 \text{ oder } L_1 \leq 1{,}3 \cdot D_1$$

und/oder

$$L_2 \leq 1{,}5 \cdot D_2 \text{ oder } L_2 \leq 1{,}3 \cdot D_2.$$

Die Begrenzung der Eingriffslänge im Verhältnis zum Außendurchmesser wirkt der Gefahr der Entstehung von Kavitation in Betriebspunkten hoher Drehzahlen der Pumpe entgegen.

Die Zahnradpumpe ist mehrflutig, wobei die erste Förderkammer und der erste Rotorsatz eine erste Flut und die zweite Förderkammer und der zweite Rotorsatz eine zweite Flut bilden. In vorteilhaften Ausführungen ist auch die zweite Förderkammer mit dem Gehäuseeinlass und dem Gehäuseauslass verbunden. In solchen Ausführungen ist der Gehäuseeinlass mit einem Kammereinlass der zweiten Förderkammer und der Gehäuseauslass ist mit einem Kammerauslass der zweiten Förderkammer verbunden. Der zweite Rotorsatz fördert dann bei Drehantrieb ebenfalls Fluid vom Gehäuseeinlass durch die zweite Förderkammer zum Gehäuseauslass. Von dem Fluid, das durch den Gehäuseeinlass einströmt, werden ein erster Fluidstrom über die erste Förderkammer und ein zweiter Fluidstrom über die zweite Förderkammer gefördert. Nach dem Durchströmen der Förderkammern werden diese Fluidströme wieder zusammengeführt und durch den Gehäuseauslass abgefördert. Die beiden Rotorsätze sind hydraulisch parallelgeschaltet. Aufgrund der Teilung des Gesamtförderstroms auf wenigstens zwei Teilvolumenströme, vorzugsweise genau zwei Teilströme, fördert der einzelne Rotorsatz jeweils nur einen Teil, beispielsweise die Hälfte, der Gesamtfördermenge der Zahnradpumpe. Hierdurch kann der einzelne Rotorsatz kleiner und insbesondere mit einem im Vergleich zu einflutigen Zahnradpumpen verringerten Außendurchmesser auch wesentlich reibungsärmer ausgeführt werden. Bei einem mit engen Spielen im Umfangslagerspalt rotierenden Außenrotor steigt - vergleichbar mit den Verhältnissen bei hydrodynamischen Gleitlagern - das Reibmoment quadratisch mit dem Außendurchmesser des Außenrotors an. Für die Stirnflächen des Rotorsatzes gilt dies ebenfalls.

In anderen mehrflutigen Ausführungen kann das Pumpengehäuse den Gehäuseeinlass als einen ersten Gehäuseeinlass und zusätzlich einen zweiten Gehäuseeinlass aufweisen, der mit der zweiten Förderkammer über deren Kammereinlass verbunden ist. Im Pumpenbetrieb kann somit ein erster Fluidstrom durch den ersten Gehäuseeinlass in das Pumpengehäuse und dort in die erste Förderkammer strömen, während ein zweiter Fluidstrom durch den zweiten Gehäuseeinlass in das Pumpengehäuse und dort in die zweite Förderkammer strömt. Die zweite Förderkammer kann über ihren Kammerauslass mit dem gleichen Gehäuseauslass wie die erste Förderkammer verbunden sein. Sind die Förderkammern mit dem gleichen Gehäuseauslass verbunden, werden die aus den Förderkammern ausgeschobenen Fluidströme im Pumpengehäuse wieder zusammengeführt und als ein einziger Fluidstrom durch den gemeinsamen Gehäuseauslass abgefördert.

Das Pumpengehäuse kann den Gehäuseauslass als einen ersten Gehäuseauslass und zusätzlich einen zweiten Gehäuseauslass aufweisen, wobei die zweite Förderkammer über ihren Kammerauslass mit dem zweiten Gehäuseauslass verbunden ist. In derartigen Ausführungen werden die aus den Förderkammern ausgeschobenen Fluidströme im Pumpengehäuse separat voneinander zum jeweiligen Gehäuseauslass geführt, und ein erster Fluidstrom strömt durch den ersten Gehäuseauslass und ein zweiter Fluidstrom strömt durch den zweiten Gehäuseauslass ab. In Ausführungen mit erstem und zweitem Gehäuseauslass kann ein für beide Förderkammern gemeinsamer Gehäuseeinlass vorgesehen sein, so dass der einströmende Fluidstrom erst im Pumpengehäuse in den ersten Fluidstrom und den zweiten Fluidstrom geteilt wird, beispielsweise erst unmittelbar vor dem Einströmen in die jeweilige Förderkammer. Alternativ kann das Pumpengehäuse aber auch einen ersten Gehäuseeinlass und einen ersten Gehäuseauslass für die erste Förderkammer und einen zweiten Gehäuseeinlass und einen zweiten Gehäuseauslass für die zweite Förderkammer aufweisen, so dass ein erster Fluidstrom durch den ersten Gehäuseeinlass und ein zweiter Fluidstrom durch den zweiten Gehäuseeinlass einströmen, getrennt zu der und durch die jeweilige Förderkammer strömen und auch weiterhin getrennt durch den jeweiligen Gehäuseauslass abströmen.

Im Vergleich zu einer Zahnradpumpe mit nur einem einzigen Rotorsatz (Zahnradsatz) kann aufgrund der Teilung in wenigstens zwei Rotorsätze bereits das Verhältnis der summierten Zahneingriffslänge zum Durchmesser des Außenrotors des jeweiligen Rotorsatzes vergrößert und dadurch bei gleichem spezifischen Fördervolumen die Reibleistung verringert und in der Folge der Gesamtwirkungsgrad erhöht werden. Die Erfindung geht einen Schritt weiter und verkleinert im Vergleich zu herkömmlichen Zahnradpumpen auch im jeweiligen Rotorsatz für sich genommen, d.h. im ersten Rotorsatz oder im zweiten Rotorsatz oder vorzugsweise in jedem dieser Rotorsätze, den Außendurchmesser im Verhältnis zur Zahneingriffslänge.

Beide Merkmale, nämlich (1) die Reduzierung des Außendurchmessers eines oder mehrerer innenachsigen Rotorsätze zugunsten der axialen Verlängerung und (2) die hydraulische Parallelschaltung oder, bildlich gesprochen, die Teilung eines Rotorsatzes in mehrere Rotorsätze, können insbesondere in Kombination verwirklicht sein, sind aber auch jeweils für sich genommen vorteilhaft. Die Anmelderin behält es sich vor, auf die hydraulische Parallelschaltung eine eigene Anmeldung zu richten.

Die axiale Erstreckung des jeweiligen Rotorsatzes bei gleichzeitiger Verringerung des Außenrotor-Durchmessers kann vorteilhafterweise so weit gesteigert werden, dass auch im oberen Betriebsdrehzahlbereich das Auftreten von Kavitation noch sicher vermieden wird. Zur Vermeidung von Kavitation ist es vorteilhaft, wenn die erste Förderkammer und/oder die zweite Förderkammer beidseitig befüllt wird oder werden. Bei beidseitiger Befüllung kann das Längen-/Durchmesser-Verhältnis im Vergleich zu einer nur einseitigen Befüllung vergrößert werden.

Die im Durchmesser verkleinerten Rotorsätze können zur weiteren Reduzierung der Reibleistung am Außendurchmesser des ersten Außenrotors und/oder des zweiten Außenrotors zwischen den beiden axialen Endabschnitten des jeweiligen Außenrotors im Außendurchmesser reduziert werden, beispielsweise mit einer umlaufenden Vertiefung oder mit Taschen geformt oder versehen werden. Durch eine umlaufende Vertiefung zwischen den der Lagerung des jeweiligen Außenrotors dienenden axialen Rotorendabschnitten bildet sich im Pumpenbetrieb ein mit dem Fluid gefüllter Ringraum mit einer radialen Erstreckung von beispielsweise etwa 1 mm. Auf diese Weise verringert sich in dem ausgenommenen Bereich gegenüber den lagernden Endabschnitten des Außenrotors das durch Rotation im Umfangsspalt entstehende Schergefälle, so dass die erfindungsgemäß langgezogene Bauart des jeweiligen Außenrotors eine weitere Reduzierung des Reibmoments im Umfangsspalt ermöglicht.

In bevorzugten Ausführungen ist die Zahnradpumpe zweiflutig, so dass der Gehäuseeinlass nur mit der ersten Förderkammer und der zweiten Förderkammer und/oder der Gehäuseauslass nur mit der ersten Förderkammer und der zweiten Förderkammer verbunden ist oder sind. Bevorzugt sind die erste Förderkammer und die zweite Förderkammer nur mit dem Gehäuseeinlass und/oder nur mit dem Gehäuseauslass verbunden. Grundsätzlich umfasst die Erfindung aber auch Ausführungen, in denen im Pumpengehäuse eine oder mehrere weitere Förderkammer(n) mit jeweils einem weiteren innenachsigen Rotorsatz vorgesehen und mit dem Gehäuseeinlass und/oder dem Gehäuseauslass verbunden ist oder sind. Für den jeweiligen weiteren Rotorsatz kann oder können vorteilhafterweise ebenfalls eine oder mehrere der vorstehenden Relationen gelten.

Die Förderkammern weisen jeweils einen Niederdruckbereich und einen Hochdruckbereich auf. Bei jeder Umdrehung vergrößern sich im Niederdruckbereich die zwischen den Rotoren des jeweiligen Rotorsatzes gebildeten Förderzellen, so dass Fluid über einen im Niederdruckbereich gelegenen Kammereinlass in die Förderzellen und somit in die Förderkammer gesaugt wird. In Drehrichtung des jeweiligen Rotorsatzes verkleinern sich die Förderzellen anschließend, so dass das Fluid mit einem gegenüber dem Niederdruckbereich erhöhten Druck über einen im Hochdruckbereich gelegenen Kammerauslass ausgestoßen wird.

Der Kammereinlass der ersten Förderkammer und der Kammereinlass der zweiten Förderkammer können vorteilhafterweise an Stirnseiten der Förderkammern vorgesehen sein, die einander axial zugewandten sind. In derartigen Ausführungen kann das Fluid axial in den Niederdruckbereich der jeweiligen Förderkammer einströmen. Vorteilhaft ist, wenn das durch den Gehäuseeinlass einströmende Fluid axial zwischen den Förderkammern in einen ersten Fluidstrom und einen zweiten Fluidstrom verzweigt und der erste Fluidstrom direkt in die erste Förderkammer und der zweite Fluidstrom direkt in die zweite Förderkammer einströmen.

Der Kammerauslass der ersten Förderkammer und der Kammerauslass der zweiten Förderkammer können vorteilhafterweise an Stirnseiten der Förderkammern vorgesehen sein, die einander axial zugewandten sind. In derartigen Ausführungen kann das Fluid axial aus dem Hochdruckbereich der jeweiligen Förderkammer ausströmen. Vorteilhaft ist, wenn der durch den Kammerauslas der ersten Förderkammer ausströmende erste Fluidstrom und der durch den Kammerauslass der zweiten Förderkammer ausströmende zweite Fluidstrom axial zwischen den Förderkammern zusammenströmen und anschließend durch den Gehäuseauslass abströmen.

Durch eine derartige Anordnung der Kammereinlässe und/oder der Kammerauslässe kann Bauraum eingespart und der Strömungswiderstand zwischen dem Gehäuseeinlass und der jeweiligen Förderkammer und/oder zwischen der jeweiligen Förderkammer und dem Gehäuseauslass verringert werden. Einer kompakten Bauweise und kurzen Zuströmstrecken und/oder Ausströmstrecken und in der Folge geringen Strömungswiderständen im Bereich der Zu- und/oder Ausströmung kommt entgegen, wenn der Niederdruckbereich der ersten Förderkammer dem Niederdruckbereich der zweiten Förderkammer axial zugewandt gegenüberliegt. Dabei können die beiden Niederdruckbereiche in Bezug auf die Umfangsrichtung um die jeweilige Drehachse vollständig überlappen oder, wie bevorzugt, einen gewissen Winkelversatz zueinander aufweisen, also in Bezug auf ihre Drehwinkelposition zueinander versetzt sein.

Die Zahnradpumpe ist vorteilhafterweise als Zahnringpumpe ausgeführt. In derartigen Ausführungen weist der Innenrotor des jeweiligen Rotorsatzes einen Zahn weniger als der Außenrotor des gleichen Rotorsatzes auf. Die Zahnradpumpe kann grundsätzlich aber auch als Innenzahnradpumpe ausgeführt sein. In derartigen Ausführungen ist in der jeweiligen Förderkammer ein sichelförmiges Dichtstück angeordnet, um den Hochdruckbereich der jeweiligen Förderkammer vom Niederdruckbereich der gleichen Förderkammer fluidisch zu trennen. In noch einer Variante kann die Zahnradpumpe als eine Mischform der beiden genannten innenachsigen Zahnradpumpen ausgeführt sein, indem beispielsweise der erste Rotorsatz als Zahnringsatz, beispielsweise in Gerotorbauweise, und der zweite Rotorsatz als Innenzahnradsatz (mit Dichtstück) ausgeführt sind.

In bevorzugten Ausführungen sind der erste Rotorsatz und der zweite Rotorsatz der Art nach gleich, beispielsweise jeweils als Zahnringsatz ausgeführt. Der erste Außenrotor und der zweite Außenrotor können insbesondere den gleichen Außendurchmesser haben. Bevorzugt sind sie auch über den Außenumfang insgesamt gleich. Vorteilhafterweise sind die Außenrotoren gleich lang. Die Eingriffslänge kann vorteilhafterweise der axialen Länge des jeweiligen Außenrotors entsprechen. Insbesondere können der erste Außenrotor und der zweite Außenrotor geometrisch gleich sein. Der erste Innenrotor und der zweite Innenrotor sind in vorteilhaften Ausführungen geometrisch gleich. Die Rotoren des ersten Rotorsatzes und/oder die Rotoren des zweiten Rotorsatzes können insbesondere gleich lang sein.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich auf nachfolgend in Figuren illustrierte Ausführungsbeispiele der Erfindung. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals auf.

1. Zahnradpumpe zur Förderung eines hydraulischen Fluids, beispielsweise eines Kühlfluids und/oder eines Schmierfluids, die Zahnradpumpe umfassend:

1.1 ein Pumpengehäuse (1) mit einem Gehäuseeinlass (2) und einem Gehäuseauslass (3) für das Fluid, einer mit dem Gehäuseeinlass (2) und dem Gehäuseauslass (3) verbundenen ersten Förderkammer (4) und einer zweiten Förderkammer (5), die vorzugsweise ebenfalls mit dem Gehäuseeinlass (2) und dem Gehäuseauslass (3) verbunden ist,

1.2 eine Antriebswelle (40),

1.3 einen mit der Antriebswelle (40) gekoppelten und in der ersten Förderkammer (4) drehbaren innenachsigen ersten Rotorsatz (11), der einen außenverzahnten ersten Innenrotor (12) und einen innenverzahnten ersten Außenrotor (13) aufweist, die in einem ersten Zahneingriff sind, um Fluid vom Gehäuseeinlass (2) zum Gehäuseauslass (3) zu fördern, und

1.4 einen mit der Antriebswelle (40) gekoppelten und in der zweiten Förderkammer (5) drehbaren innenachsigen zweiten Rotorsatz (14), der einen außenverzahnten zweiten Innenrotor (15) und einen innenverzahnten zweiten Außenrotor (16) aufweist, die in einem zweiten Zahneingriff sind, um Fluid zu fördern, wobei

1.5 eine axiale Eingriffslänge ($L_1$) des ersten Zahneingriffs wenigstens dem 0,7-fachen des Außendurchmessers ($D_1$) des ersten Außenrotors (13) und/oder

1.6 eine axiale Eingriffslänge ($L_2$) des zweiten Zahneingriffs wenigstens dem 0,7-fachen des Außendurchmessers ($D_2$) des zweiten Außenrotors (16) entspricht.

2. Zahnradpumpe nach dem vorhergehenden Aspekt, wobei die axiale Eingriffslänge ($L_1$) des ersten Zahneingriffs höchstens dem 1,5-fachen oder 1,3-fachen des Außendurchmessers ($D_1$) des ersten Außenrotors (13) und/oder die axiale Eingriffslänge ($L_2$) des zweiten Zahneingriffs höchstens dem 1,5-fachen oder 1,3-fachen des Außendurchmessers ($D_2$) des zweiten Außenrotors (16) entspricht oder jeweils entsprechen.

3. Zahnradpumpe nach einem der vorhergehenden Aspekte, wobei der Außendurchmesser ($D_1$) des ersten Außenrotors (13) höchstens dem 2-fachen oder 1,5-fachen des Fußkreisdurchmessers ($D_{F1}$) des ersten Außenrotors (13) und/oder wobei der Außendurchmesser ($D_2$) des zweiten Außenrotors (16) höchstens dem 2-fachen oder 1,5-fachen des Fußkreisdurchmessers ($D_{F2}$) des zweiten Außenrotors (16) entspricht oder jeweils entsprechen.

4. Zahnradpumpe nach einem der vorhergehenden Aspekte, wobei die axiale Eingriffslänge ($L_1$) des ersten Zahneingriffs und/oder die axiale Eingriffslänge ($L_2$) des zweiten Zahneingriffs wenigstens dem 0,7-fachen oder 0,8-fachen oder 0,9-fachen des Außendurchmessers ($D_1$) des ersten Außenrotors (13) und wenigstens dem 0,7-fachen oder 0,8-fachen oder 0,9-fachen des Außendurchmessers ($D_2$) des zweiten Außenrotors (16) entspricht oder jeweils entsprechen.

5. Zahnradpumpe nach einem der vorhergehenden Aspekte, wobei die axiale Eingriffslänge ($L_1$) des ersten Zahneingriffs und/oder die axiale Eingriffslänge ($L_2$) des zweiten Zahneingriffs höchstens dem 1,5-fachen oder 1,3-fachen des Außendurchmessers ($D_1$) des ersten Außenrotors (13) und höchstens dem 1,5-fachen oder 1,3-fachen des Außendurchmessers ($D_2$) des zweiten Außenrotors (16) entspricht oder jeweils entsprechen.

6. Zahnradpumpe nach einem der vorhergehenden Aspekte, wobei die axiale Eingriffslänge ($L_1$) des ersten Zahneingriffs wenigstens dem 0,8-fachen oder 0,9-fachen des Außendurchmessers ($D_1$) des ersten Außenrotors (13) und/oder die axiale Eingriffslänge ($L_2$) des zweiten Zahneingriffs wenigstens dem 0,8-fachen oder 0,9-fachen des Außendurchmessers ($D_2$) des zweiten Außenrotors (16) entspricht.

7. Zahnradpumpe nach einem der vorhergehenden Aspekte, wobei der Außendurchmesser ($D_1$) des ersten Außenrotors (13) und der Außendurchmesser ($D_2$) des zweiten Außenrotors (16) gleich sind.

8. Zahnradpumpe nach einem der vorhergehenden Aspekte, wobei die Eingriffslänge ($L_1$) des ersten Zahneingriffs und die Eingriffslänge ($L_2$) des zweiten Zahneingriffs gleich sind.

9. Zahnradpumpe nach einem der vorhergehenden Aspekte, wobei die Eingriffslänge ($L_1$) des ersten Zahneingriffs der Gesamtlänge des ersten Außenrotors (13) und/oder die Eingriffslänge ($L_2$) des zweiten Zahneingriffs der Gesamtlänge des zweiten Außenrotors (16) entspricht oder jeweils entsprechen.

10. Zahnradpumpe nach einem der vorhergehenden Aspekte, wobei der erste Innenrotor (12) und der zweite Innenrotor (15) geometrisch und/oder dem Werkstoff nach gleich sind.

11. Zahnradpumpe nach einem der vorhergehenden Aspekte, wobei der erste Außenrotor (13) und der zweite Außenrotor (16) geometrisch und/oder dem Werkstoff nach gleich sind.

12. Zahnradpumpe nach einem der vorhergehenden Aspekte, wobei der zweite Rotorsatz (14) mit dem ersten Rotorsatz (11) hydraulisch parallelgeschaltet ist, um ebenfalls Fluid vom Gehäuseeinlass (2) zum Gehäuseauslass (3) zu fördern.

13. Zahnradpumpe nach einem der vorhergehenden Aspekte, wobei

- eine Stirnseite der ersten Förderkammer (4) einer Stirnseite der zweiten Förderkammer (5) axial zugewandt gegenüberliegt,
- das Pumpengehäuse (1) eine mit dem Gehäuseeinlass (2) verbundene Zuführung (2a) und eine mit dem Gehäuseauslass (3) verbundene Abführung (3a) aufweist und
- sich die Zuführung (2a) und/oder die Abführung (3a) bis zwischen die einander zugewandten Stirnseiten der Förderkammern (4, 5) erstreckt oder erstrecken.

14. Zahnradpumpe nach dem vorhergehenden Aspekt, wobei die Zuführung (2a) an einer Stirnseite axial in einen Niederdruckbereich der ersten Förderkammer (4) und an der anderen Stirnseite axial in einen Niederdruckbereich der zweiten Förderkammer (5) mündet.

15. Zahnradpumpe nach einem der zwei unmittelbar vorhergehenden Aspekte, wobei ein Hochdruckbereich der ersten Förderkammer (4) und ein Hochdruckbereich der zweiten Förderkammer (5) an axial voneinander abgewandten Stirnseiten der Abführung (3a) axial in die Abführung (3a) münden.

16. Zahnradpumpe nach einem der vorhergehenden Aspekte, wobei

- ein Niederdruckbereich der ersten Förderkammer (4) einem Niederdruckbereich der zweiten Förderkammer (5) axial zugewandt gegenüberliegt, so dass der Niederdruckbereich der ersten Förderkammer (4) mit dem Niederdruckbereich der zweiten Förderkammer (5) zumindest teilweise überlappt, und/oder
- ein Hochdruckbereich der ersten Förderkammer (4) einem Hochdruckbereich der zweiten Förderkammer (5) axial zugewandt gegenüberliegt, so dass der Hochdruckbereich der ersten Förderkammer (4) mit dem Hochdruckbereich der zweiten Förderkammer (5) zumindest teilweise überlappt.

17. Zahnradpumpe nach einem der vorhergehenden Aspekte, wobei

- eine Stirnseite der ersten Förderkammer (4) einer Stirnseite der zweiten Förderkammer (5) axial zugewandt gegenüberliegt und
- der Gehäuseeinlass (2) an einer Umfangswand des Gehäuses (1) vorgesehen ist und eine virtuelle Gerade (S) umgibt, die sich zwischen den einander zugewandten Stirnseiten der Förderkammern (4, 5) orthogonal zu einer Drehachse ($R_I$, $R_A$) des ersten Rotorsatzes (11) und/oder des zweiten Rotorsatzes (14) erstreckt, und/oder
- der Gehäuseauslass (3) an einer Umfangswand des Gehäuses (1) vorgesehen ist und eine virtuelle Gerade (S) umgibt, die sich zwischen den einander zugewandten Stirnseiten der Förderkammern (4, 5) orthogonal zu einer Drehachse ($R_I$, $R_A$) des ersten Rotorsatzes (11) und/oder des zweiten Rotorsatzes (14) erstreckt.

18. Zahnradpumpe nach einem der vorhergehenden Aspekte, wobei wenigstens einer der Rotorsätze (11, 14) an beiden Stirnseiten mit dem Fluid befüllbar und/oder das Fluid an beiden Stirnseiten wenigstens eines der Rotorsätze (11, 14) ausschiebbar ist.

19. Zahnradpumpe nach einem der vorhergehenden Aspekte, wobei der erste Innenrotor (12) und der zweite Innenrotor (15) um eine gemeinsame Drehachse ($R_I$) und/oder der erste Außenrotor (13) und der zweite Außenrotor (16) um eine gemeinsame Drehachse ($R_A$) drehbar sind.

20. Zahnradpumpe nach einem der vorhergehenden Aspekte, wobei der erste Innenrotor (12) und/oder der zweite Innenrotor (15) drehunbeweglich mit der Antriebswelle (40) verbunden, vorzugsweise form- und/oder reibschlüssig mit der Antriebswelle (40) gefügt ist oder sind.

21. Zahnradpumpe nach dem vorhergehenden Aspekt, wobei der erste Innenrotor (12) und/oder der zweite Innenrotor (15) relativ zur Antriebswelle (40) axial beweglich ist oder sind.

22. Zahnradpumpe nach einem der vorhergehenden Aspekte, wobei der erste Innenrotor (12) und/oder der zweite Innenrotor (15) die Antriebswelle (40) umgibt oder umgeben.

23. Zahnradpumpe nach dem vorhergehenden Aspekt, wobei

- der erste Innenrotor (12) und/oder der zweite Innenrotor (15) in der Überlappung mit der Antriebswelle (40) an einem Innenumfang eine Nut (17) aufweist oder jeweils aufweisen und
- die Antriebswelle (40) mit einem Querstift (43) versehen ist, der von einem Außenumfang der Antriebswelle (40) vorragt und in die Nut (17) des ersten Innenrotors (12) und/oder die Nut (17) des zweiten Innenrotors (15) ragt,
- so dass der jeweilige Innenrotor (12; 15) im Eingriff des Querstifts (43) und der Nut (17) drehunbeweglich mit der Antriebswelle (40) verbunden ist.

24. Zahnradpumpe nach dem vorhergehenden Aspekt, wobei sich der Querstift (43) durch die Antriebswelle (40) erstreckt und beidseitig vom Außenumfang der Antriebswelle (40) vorragt und der erste Innenrotor (12) und/oder der zweite Innenrotor (15) am Innenumfang einander gegenüberliegende Nuten (17) aufweist, in die der Querstift (43) ragt.

25. Zahnradpumpe nach einem der zwei unmittelbar vorhergehenden Aspekte, wobei sich die jeweilige Nut (17) bis zu einem Stirnende des ersten Innenrotors (12) oder des zweiten Innenrotors (15), vorzugsweise bis zu einem vom jeweils anderen Innenrotor (12; 15) abgewandten Stirnende, erstreckt.

26. Zahnradpumpe nach einem der vorhergehenden Aspekte, wobei der erste Innenrotor (12), der zweite Innenrotor (15) und die Antriebswelle (40) jeweils in einem Stück geformt sind und der erste Innenrotor (12) und/oder der zweite Innenrotor (15) die Antriebswelle (40) unmittelbar umgibt oder umgeben.

27. Zahnradpumpe nach einem der Aspekte 1 bis 22, wobei der erste Innenrotor (12) mit einer ersten Lagerhülse (41) und/oder der zweite Innenrotor (15) mit einer zweiten Lagerhülse (42) drehunbeweglich gefügt ist oder sind und die jeweilige Lagerhülse (41; 42) in einem Formschluss unmittelbar mit der Antriebswelle (40) drehunbeweglich, aber vorzugsweise axial beweglich, verbunden ist.

28. Zahnradpumpe nach einem der vorhergehenden Aspekte, umfassend einen elektrischen Antriebsmotor (55) mit einem Stator (56) und einem Rotor (57), der koaxial zur Antriebswelle (40) in einem axial an das Pumpengehäuse (1) grenzenden Motorgehäuse (50) angeordnet ist.

29. Zahnradpumpe nach einem der vorhergehenden Aspekte, umfassend einen elektrischen Antriebsmotor (55) mit einem Stator (56) und einem Rotor (57), der drehunbeweglich auf oder an der Antriebswelle (40) montiert, vorzugsweise form- und/oder reibschlüssig mit der Antriebswelle (40) gefügt ist.

30. Zahnradpumpe nach dem vorhergehenden Aspekt, wobei die Antriebswelle (40) den Rotor (57) radial fliegend lagert.

31. Zahnradpumpe nach einem der drei unmittelbar vorhergehenden Aspekte, wobei

- der Antriebsmotor (55) in einem Motorgehäuse (50) angeordnet ist,
- die Antriebswelle (40) durch eine Stirnwand ragt, die sich axial zwischen dem Pumpengehäuse (1) und dem Motorgehäuse (50) erstreckt, und
- die Stirnwand ein Wellenlager (53), vorzugsweise ein Radialgleitlager, für die Antriebswelle (40) bildet.

32. Zahnradpumpe nach dem vorhergehenden Aspekt, wobei das Pumpengehäuse (1) und das Motorgehäuse (50) gefügt sind und das Motorgehäuse (50) die Stirnwand bildet.

33. Zahnradpumpe nach einem der zwei unmittelbar vorhergehenden Aspekte, wobei das Pumpengehäuse (1) eine Zentrierstruktur (1a) und das Motorgehäuse (50) eine Zentriergegenstruktur (54) aufweisen, die miteinander in einem Zentriereingriff sind und dadurch das Motorgehäuse (50) am Pumpengehäuse (1) in Bezug auf die Drehachse ($R_l$) der Antriebswelle (40) zentrieren.

34. Zahnradpumpe nach dem vorhergehenden Aspekt, wobei eines aus Zentrierstruktur (1a) und Zentriergegenstruktur (54) einen Außenumfang und das andere aus Zentrierstruktur (1a) und Zentriergegenstruktur (54) einen Innenumfang aufweisen, der den Außenumfang mit zentrierendem Kontakt umgibt.

35. Zahnradpumpe nach dem vorhergehenden Aspekt, wobei eines aus Zentrierstruktur (1a) und Zentriergegenstruktur (54) ein Zentrierbund (54) ist, der den im Zentriereingriff befindlichen Innenumfang aufweist.

36. Zahnradpumpe nach einem der vorhergehenden Aspekte jeweils in Kombination mit Aspekt 28, wobei die Antriebswelle (40) am Motorgehäuse (50), vorzugsweise an einem Motordeckel (58) des Motorgehäuses (50), axial abgestützt ist.

37. Zahnradpumpe nach einem der vorhergehenden Aspekte, wobei die Antriebswelle (40) in einem Wellenlager (10) des Pumpengehäuses (1) axial zwischen den Rotorsätzen (11, 14) drehbar gelagert ist, wobei das Wellenlager (10) vorzugsweise ein Radialgleitlager ist.

38. Zahnradpumpe nach einem der vorhergehenden Aspekte, umfassend eine am Pumpengehäuse (1) befestigte Stirnwand (20; 50), die die erste Förderkammer (4) an einer von der zweiten Förderkammer (5) abgewandten Stirnseite verschließt und einen axialen Durchgang aufweist, durch den sich die Antriebswelle (40) erstreckt.

39. Zahnradpumpe nach dem vorhergehenden Aspekt, wobei die Stirnwand (20; 50) ein Wellenlager (53), vorzugsweise ein Radialgleitlager, für die Antriebswelle (40) bildet.

40. Zahnradpumpe nach einem der zwei unmittelbar vorhergehenden Aspekte, wobei ein erster Gehäusedeckel (20) oder das Motorgehäuse (50) nach Aspekt 28 die Stirnwand bildet.

41. Zahnradpumpe nach einem der drei unmittelbar vorhergehenden Aspekte, wobei die Stirnwand (20; 50) einen muldenförmigen äußeren Kammereinlass (21; 51) aufweist, der über einen Zuführkanal (7a) mit dem Gehäuseeinlass (2) verbunden ist.

42. Zahnradpumpe nach einem der vier unmittelbar vorhergehenden Aspekte, wobei die Stirnwand (20; 50) einen muldenförmigen äußeren Kammerauslass (22; 52) aufweist, der über einen Abführkanal (9a) mit dem Gehäuseauslass (3) verbunden ist.

43. Zahnradpumpe nach einem der vorhergehenden Aspekte, umfassend einen am Pumpengehäuse (1) befestigten zweiten Gehäusedeckel (30), der die zweite Förderkammer (5) an einer von der ersten Förderkammer (4) abgewandten Stirnseite verschließt.

44. Zahnradpumpe nach dem vorhergehenden Aspekt, wobei der zweite Gehäusedeckel (30) ein Wellenlager (33), vorzugsweise ein Radialgleitlager, für die Antriebswelle (40) bildet.

45. Zahnradpumpe nach einem der zwei unmittelbar vorhergehenden Aspekte, wobei die Antriebswelle (40) am zweiten Gehäusedeckel (30) axial abgestützt ist.

46. Zahnradpumpe nach einem der drei unmittelbar vorhergehenden Aspekte, wobei das Pumpengehäuse (1) eine Zentrierstruktur (1b) und der zweite Gehäusedeckel (30) eine Zentriergegenstruktur (34) aufweisen, die miteinander in einem Zentriereingriff sind und dadurch den zweiten Gehäusedeckel (30) am Pumpengehäuse (1) in Bezug auf die Drehachse (R$_l$) der Antriebswelle (40) zentrieren.

47. Zahnradpumpe nach dem vorhergehenden Aspekt, wobei eines aus Zentrierstruktur (1b) und Zentriergegenstruktur (34) einen Außenumfang und das andere aus Zentrierstruktur (1b) und Zentriergegenstruktur (34) einen Innenumfang aufweisen, der den Außenumfang mit zentrierendem Kontakt umgibt.

48. Zahnradpumpe nach dem vorhergehenden Aspekt, wobei eines aus Zentrierstruktur (1b) und Zentriergegenstruktur (34) ein Zentrierbund (34) ist, der den im Zentriereingriff befindlichen Innenumfang aufweist.

49. Zahnradpumpe nach einem der drei unmittelbar vorhergehenden Aspekte, wobei der zweite Gehäusedeckel (30) einen muldenförmigen äußeren Kammereinlass (31) aufweist, der über einen Zuführkanal (7b) mit dem Gehäuseeinlass (2) verbunden ist.

50. Zahnradpumpe nach einem der vier unmittelbar vorhergehenden Aspekte, wobei der zweite Gehäusedeckel (30) einen muldenförmigen äußeren Kammerauslass (32) aufweist, der über einen Abführkanal (9b) mit dem Gehäuseauslass (3) verbunden ist.

51. Zahnradpumpe nach einem der vorhergehenden Aspekte, wobei

- die erste Förderkammer (4) einen Niederdruckbereich, einen Hochdruckbereich und in Umfangsrichtung zwischen dem Niederdruckbereich und dem Hochdruckbereich einen Trennsteg ($T_{t4}$) aufweist, um den Hochdruckbereich und den Niederdruckbereich der ersten Förderkammer (4) fluidisch voneinander zu trennen,
- die zweite Förderkammer (5) einen Niederdruckbereich, einen Hochdruckbereich und in Umfangsrichtung zwischen dem Niederdruckbereich und dem Hochdruckbereich einen Trennsteg ($T_{t5}$) aufweist, um den Hochdruckbereich und den Niederdruckbereich der zweiten Förderkammer (5) fluidisch voneinander zu trennen, und wobei
- der Trennsteg ($T_{t4}$) der ersten Förderkammer (4) zum Trennsteg ($T_{t5}$) der zweiten Förderkammer (5) in Umfangsrichtung um eine Drehachse ($R_l$) des ersten Rotorsatzes (11) und/oder des zweiten Rotorsatzes (14) gemessen einen Winkelversatz ($2\alpha$) aufweist, so dass bei Drehung der Rotorsätze (11, 14) der pro Umdrehung stattfindende Ausschiebevorgang des ersten Rotorsatzes (11) und der pro Umdrehung stattfindende Ausschiebevorgang des zweiten Rotorsatzes (14) dem Winkelversatz ($2\alpha$) entsprechend phasenverschoben sind.

52. Zahnradpumpe nach dem vorhergehenden Aspekt, wobei der Winkelversatz ($2\alpha$) wenigstens ein Viertel und höchstens drei Viertel einer in Umfangsrichtung auf dem Teilkreis gemessenen Zahnbreite des ersten Außenrotors (13) und/oder wenigstens ein Viertel und höchstens drei Viertel einer in Umfangsrichtung auf dem Teilkreis gemessenen Zahnbreite des zweiten Außenrotors (16) beträgt.

53. Zahnradpumpe nach einem der vorhergehenden Aspekte, wobei in einem Gleitlagerspalt, den der erste Außenrotor (13) mit einer Umfangswand der ersten Förderkammer (4) bildet, und/oder in einem Gleitlagerspalt, den der zweite Außenrotor (16) mit einer Umfangswand der zweiten Förderkammer (5) bildet, in der jeweiligen Umfangswand oder am Außenumfang des jeweiligen Außenrotors (13, 16) eine oder mehrere lokale Vertiefungen (4a; 16b) geformt ist oder sind, um bei Drehung des jeweiligen Außenrotors (13, 16) im jeweiligen Gleitlagerspalt ein in Umfangsrichtung als Reibmoment wirkendes Schergefälle eines im Gleitlagerspalt befindlichen Fluids zu verringern.

54. Zahnradpumpe nach einem der vorhergehenden Aspekte, wobei am Außenumfang des jeweiligen Außenrotors (13, 16) eine oder mehrere Axialnuten oder taschenförmige Vertiefungen (4a) oder eine oder mehrere ringförmig umlaufende Vertiefungen (16b) geformt ist oder sind.

55. Zahnradpumpe nach einem der vorhergehenden Aspekte, wobei der jeweilige Außenrotor (13, 16) am Außenumfang eine oder mehrere Vertiefungen (16b) und axial links und rechts neben der einen oder den mehreren Vertiefungen (16b) jeweils einen umlaufend glatten Umfangstreifen aufweist, in dessen Bereich der jeweilige Außenrotor (13, 16) mit der Umfangswand der jeweiligen Förderkammer (4, 5) einen Tragspalt bildet.

56. Zahnradpumpe nach einem der Aspekte 1 bis 52, wobei der erste Außenrotor (13) und/oder der zweite Außenrotor (16) einen ersten Rotoraxialabschnitt mit einem ersten Außendurchmesser und einen zweiten Rotoraxialabschnitt (16a) mit einem zweiten Außendurchmesser aufweist, wobei der erste Außendurchmesser größer als der zweite Außendurchmesser ist, und wobei die Förderkammer (4, 5), in der der jeweilige Außenrotor (13, 16) angeordnet ist, in Überlappung mit dem ersten Rotoraxialabschnitt einen ersten Kammeraxialabschnitt (5a) mit einem ersten Innendurchmesser und in Überlappung mit dem zweiten Rotoraxialabschnitt (16a) einen zweiten Kammeraxialabschnitt mit einem zweiten Innendurchmesser aufweist, und wobei der erste Innendurchmesser in Anpassung an den ersten Außendurchmesser größer als der an den zweiten Außendurchmesser angepasste zweite Innendurchmesser ist.

57. Zahnradpumpe nach dem vorhergehenden Aspekt, wobei der erste Rotoraxialabschnitt kürzer als der im Außendurchmesser reduzierte zweite Rotoraxialabschnitt (16a) und der erste Kammeraxialabschnitt (5a) länger als der im Innendurchmesser reduzierte zweite Kammeraxialabschnitt ist, so dass im ersten Rotoraxialabschnitt und im zweiten Kammeraxialabschnitt jeweils ein Tragspalt und axial zwischen dem ersten Rotoraxialabschnitt und dem zweiten Kammeraxialabschnitt ein Umfangsspalt (5a, 16a) erhalten wird, der radial weiter als die Tragspalte ist.

58. Zahnradpumpe nach einem der vorhergehenden Aspekte, wobei das Pumpengehäuse (1) eine Umfangswand der ersten Förderkammer (4) und eine Umfangswand der zweiten Förderkammer (5) und die jeweilige Umfangswand ein Radialgleitlager für den jeweiligen Außenrotor (13, 16) bilden.

59. Zahnradpumpe nach einem der vorhergehenden Aspekte, wobei

- das Pumpengehäuse (1) eine Stirnwand aufweist, die für die Förderkammern (4, 5) jeweils eine innere Stirnwand bildet, und
- sich die erste Förderkammer (4) von der inneren Stirnwand ausgehend in eine axiale Richtung und die zweite Förderkammer (5) von der inneren Stirnwand ausgehend in die axiale Gegenrichtung jeweils bis zu einem offenen Stirnende des Pumpengehäuses (1) erstrecken und
- mittels einer mit dem Pumpengehäuse (1) gefügten äußeren Stirnwand (20, 30; 30, 50) verschlossen sind.

60. Zahnradpumpe nach dem vorhergehenden Aspekt, wobei die innere Stirnwand an einer Stirnseite einen inneren Kammereinlass (6a) für die erste Förderkammer (4) und an der anderen Stirnseite einen inneren Kammereinlass (6b) für die zweite Förderkammer (5) aufweist und sich in der inneren Stirnwand in eine Richtung quer zur Antriebswelle (40) eine Zuführung (2a) erstreckt, die den Gehäuseeinlass (2) mit den inneren Kammereinlässen (6a, 6b) verbindet.

61. Zahnradpumpe nach einem der zwei unmittelbar vorhergehenden Aspekte, wobei die innere Stirnwand an einer Stirnseite einen inneren Kammerauslass (8a) für die erste Förderkammer (4) und an der anderen Stirnseite einen inneren Kammerauslass (8b) für die zweite Förderkammer (5) aufweist und sich in der inneren Stirnwand in eine Richtung quer zur Antriebswelle (40) eine Abführung (3a) erstreckt, die den Gehäuseauslass (3) mit den inneren Kammerauslässen (8a, 8b) verbindet.

62. Zahnradpumpe nach Aspekt 56 oder Aspekt 57, wobei der Gehäuseeinlass (2) und/oder der Gehäuseauslass (3) an einem Außenumfang des Pumpengehäuses (1) axial auf der Höhe der inneren Stirnwand angeordnet ist oder sind.

63. Zahnradpumpe nach dem vorhergehenden Aspekt, wobei sich der Gehäuseeinlass (2) und die Zuführung (2a) in einer Flucht quer zur Antriebswelle (40) und/oder der Gehäuseeinlass (3) und die Abführung (3a) in einer Flucht quer zur Antriebswelle (40) erstrecken.

64. Zahnradpumpe nach einem der vorhergehenden Aspekte, wobei wenigstens einer der Außenrotoren (13, 16) und/oder wenigstens einer der Innenrotoren (12, 15) aus Kunststoff, beispielsweise PEEK, geformt ist oder sind.

65. Zahnradpumpe nach einem der vorhergehenden Aspekte, wobei wenigstens einer der Außenrotoren (13, 16) und/oder wenigstens einer der Innenrotoren (12, 15) aus einem Polyketon, Polyimid, PPS, oder duroplastischen Kunststoff geformt ist oder sind.

66. Zahnradpumpe nach einem der vorhergehenden Aspekte, wobei wenigstens einer der Außenrotoren (13, 16) und/oder wenigstens einer der Innenrotoren (12, 15) ausmit Fluor und/oder Kohlenstoff gefülltem Kunststoff geformt ist oder sind.

67. Zahnradpumpe nach einem der vorhergehenden Aspekte, wobei die Außenrotoren (13, 16) aus Kunststoff, beispielsweise PEEK, geformt sind.

68. Zahnradpumpe nach einem der vorhergehenden Aspekte, wobei die Innenrotoren (12, 15) aus einem Metallwerkstoff, beispielsweise einem Sinterwerkstoff auf Eisenbasis oder Aluminiumbasis, geformt sind.

69. Zahnradpumpe nach einem der vorhergehenden Aspekte, wobei das Pumpengehäuse (1) aus einem Metallwerkstoff, beispielsweise einem Gusswerkstoff auf Eisenbasis oder Aluminiumbasis, geformt ist oder sind.

70. Zahnradpumpe nach einem der vorhergehenden Aspekte, wobei das Pumpengehäuse (1) eine Umfangswand der ersten Förderkammer (4) und eine Umfangswand der zweiten Förderkammer (5) und die jeweilige Umfangswand ein Radialgleitlager für den jeweiligen Außenrotor (13, 16) bilden.

71. Zahnradpumpe nach dem vorhergehenden Aspekt, wobei das Pumpengehäuse (1) oder zumindest die jeweilige Umfangswand aus einem Metallwerkstoff, beispielsweise einem Gusswerkstoff auf Eisenbasis oder Aluminiumbasis, geformt ist.

72. Zahnradpumpe nach Aspekt 70, wobei das Pumpengehäuse (1) oder zumindest die jeweilige Umfangswand aus einem Kunststoff, beispielsweise einem duroplastischen Kunststoff oder PPS, geformt ist.

73. Zahnradpumpe nach Aspekt 70 oder 72, wobei das Pumpengehäuse (1) oder zumindest die jeweilige Umfangswand aus mit PTFE gefülltem PPS geformt ist.

74. Zahnradpumpe nach einem der vorhergehenden Aspekte, die zur Förderung eines Kühl- und/oder Schmierfluids in einem Kühl- und/oder Schmierkreis eines elektrisch und/oder verbrennungsmotorisch angetriebenen Kraftfahrzeugs verwendet wird.

75. Zahnradpumpe nach einem der vorhergehenden Aspekte, die zur Förderung eines Kühlfluids, beispielsweise einer dielektrischen Flüssigkeit, zur Direktkühlung einer Fahrzeugtraktionsbatterie verwendet wird.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und der Aspekte sowie der vorstehend beschriebenen weiteren Ausgestaltungen vorteilhaft weiter. Es zeigen:

Figur 1    eine Zahnradpumpe eines ersten Ausführungsbeispiels in einer isometrischen Sicht auf längs einer zentralen Achse einzeln dargestellte Komponenten der Zahnradpumpe,
Figur 2    die Zahnradpumpe mit axial nebeneinander angeordneten Rotorsätzen in einem Längsschnitt,
Figur 3    die Zahnradpumpe in einem Querschnitt im Bereich eines der Rotorsätze,
Figur 4    einen der Rotorsätze mit einer Drehlagerung einer ersten Variante,
Figur 5    einen der Rotorsätze mit einer Drehlagerung einer zweiten Variante,
Figur 6    einen der Rotorsätze mit einer Drehlagerung einer dritten Variante,
Figur 7    ein zweites Ausführungsbeispiel einer Zahnradpumpe mit axial nebeneinander angeordneten Rotorsätzen in einem Längsschnitt,
Figur 8    nur die Rotorsätze der Figur 7 im Längsschnitt,
Figur 9    nur den Rotorsatz der Figur 3 im Querschnitt, und
Figur 10   eine Kammereinlass und einen Kammerauslass einer ersten Förderkammer in Überlagerung mit einem Kammereinlass und einem Kammerauslass einer zweiten Förderkammer jeweils in Draufsicht.

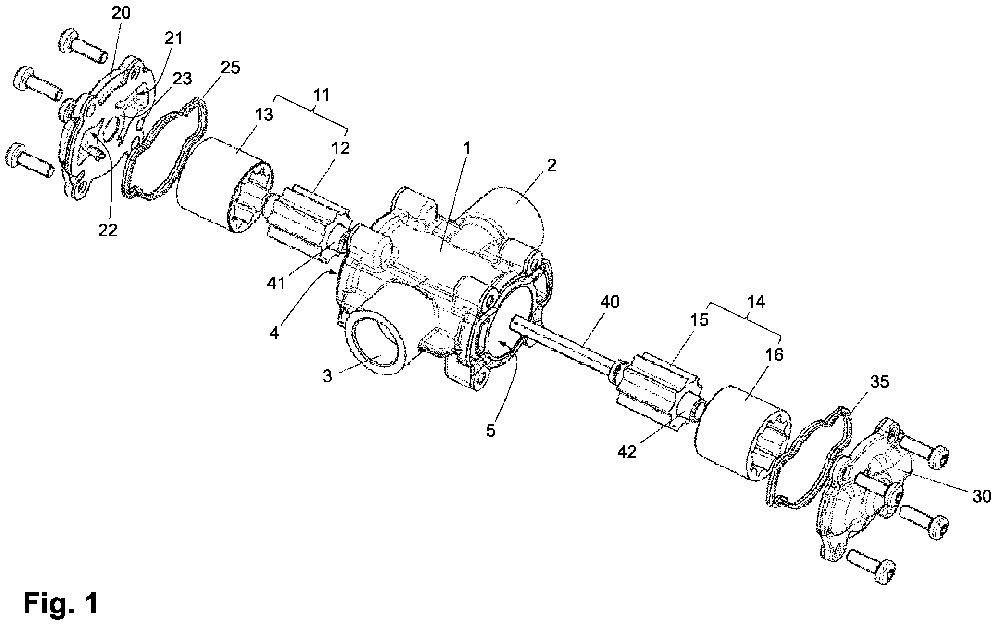

Die Isometrie der Figur 1 zeigt Komponenten einer innenachsigen Zahnradpumpe eines ersten Ausführungsbeispiels. In der Explosivdarstellung sind die Komponenten längs einer zentralen Längsachse der Zahnradpumpe einzeln erkennbar. Die Zahnradpumpe umfasst ein Pumpengehäuse 1 mit einem Gehäuseeinlass 2 und einem Gehäuseauslass 3 für ein zu förderndes Fluid, beispielsweise ein Kühl- und/oder Schmierfluid oder ein Arbeitsfluid. Die Zahnradpumpe kann insbesondere zur Förderung eines Kühlfluids, beispielsweise einer dielektrischen Flüssigkeit, zur Direktkühlung einer Fahrzeugtraktionsbatterie verwendet werden.

Die Zahnradpumpe umfasst einen ersten Rotorsatz 11 mit einem ersten Innenrotor 12 und einem ersten Außenrotor 13 sowie einen zweiten Rotorsatz 14 mit einem zweiten Innenrotor 15 und einem zweiten Außenrotor 16. Die Innenrotoren 12 und 15 weisen jeweils eine Außenverzahnung und die Außenrotoren 13 und 16 weisen jeweils eine Innenverzahnung auf. Die Innenrotoren 12 und 15 sind um eine gemeinsame Drehachse $R_I$ drehbar. Die Drehachse des jeweiligen Außenrotors 13 und 16 erstreckt sich mit einer Exzentrizität parallel zur Drehachse $R_I$. Im Pumpengehäuse 1 sind eine erste Förderkammer 4 für den ersten Rotorsatz 11 und eine zweite Förderkammer 5 für den zweiten Rotorsatz 14 gebildet. Die Förderkammern 4 und 5 erstrecken sich längs der Drehachse $R_I$, die wie bevorzugt, aber nur beispielhaft, zugleich die zentrale Längsachse des Pumpengehäuses 1 bildet. Sie können axial fluchten oder, wie bevorzugt, um einen gewissen Winkel um die Drehachse $R_I$ relativ zueinander versetzt, sozusagen mit der Exzentrizität als Schwenkarm relativ zueinander verschwenkt sein. Die Förderkammern 4 und 5 sind an axialen Stirnseiten des Pumpengehäuses 1 offen, so dass der erste Rotorsatz 11 über die eine offene Stirnseite axial in die erste Förderkammer 4 und der zweite Rotorsatz 14 axial über die andere offene Stirnseite in die zweite Förderkammer 5 eingesetzt werden können.

Für den Drehantrieb der Rotorsätze 11 und 14 ist eine gemeinsame, um die Drehachse $R_I$ drehbare Antriebswelle 40 vorgesehen. Wie bevorzugt, aber nur beispielhaft, treibt die Antriebswelle 40 die Innenrotoren 12 und 15 an, die im jeweiligen Zahneingriff den zugeordneten Außenrotor 13 bzw. 16 antreiben. Zwischen der Antriebswelle 40 und den Innenrotoren 12 und 15 besteht jeweils eine Drehkopplung, indem die Innenrotoren 12 und 15 jeweils drehunbeweglich mit der Antriebswelle 40 verbunden sind. Dabei sitzt der erste Innenrotor 12 drehunbeweglich auf einer ersten Lagerhülse 41, die mit der Antriebswelle 40 in einem verdrehgesicherten Eingriff ist, und der zweite Innenrotor 15 sitzt drehunbeweglich auf einer zweiten Lagerhülse 42, die ebenfalls in einem verdrehgesicherten Eingriff mit der Antriebswelle 40 ist. Die Lagerhülsen 41 und 42 sind im verdrehgesicherten Eingriff längs der Antriebswelle 40 axial hin und her beweglich.

Die Zahnradpumpe umfasst einen ersten Gehäusedeckel 20 für einen stirnseitigen Abschluss der ersten Förderkammer 4 und einen zweiten Gehäusedeckel 30 für einen stirnseitigen Abschluss der zweiten Förderkammer 5. Für den fluiddichten Abschluss ist an der Stirnseite der Förderkammer 4 ein Axialdichtring 25 und an der Stirnseite der Förderkammer 5 ein Axialdichtring 35 vorgesehen. Wie bevorzugt, aber nur beispielhaft, weisen die Gehäusedeckel 20 und 30 für eine beidseitige Befüllung und Entleerung der von den Rotorsätzen 11 und 14 im Zahneingriff gebildeten Förderzellen an ihren dem Pumpengehäuse 1 zugewandten Stirnseiten jeweils einen muldenförmigen Kammereinlass und einen muldenförmigen Kammerauslass auf. Beim Gehäusedeckel 20 sind der Kammereinlass 21 und der Kammerauslass 22 erkennbar. Der Gehäusedeckel 20 weist ferner eine Wellenaufnahme 23 auf, die im Ausführungsbeispiel als ein axialer Durchgang gebildet ist, durch den sich im zusammengebauten Zustand die Antriebswelle 40 erstreckt, so dass sie außerhalb des Pumpengehäuses 1 mit einem externen Antrieb gekoppelt werden kann. Der Gehäusedeckel 30 weist ebenfalls solch einen Kammereinlass und Kammerauslass und vorzugsweise auch eine derartige Wellenaufnahme auf.

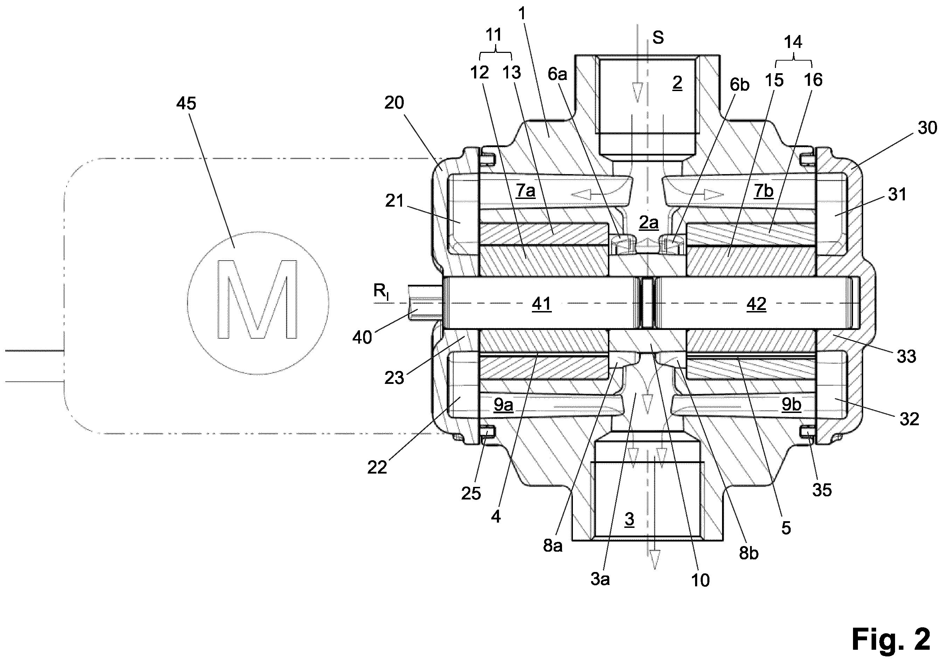

Figur 2 zeigt die Zahnradpumpe im zusammengebauten Zustand in einem Längsschnitt, in dem sich die Drehachse $R_I$ der Antriebswelle 40 erstreckt. Die Förderkammern 4 und 5 und die darin aufgenommenen Rotorsätze 11 und 14 sind längs der Drehachse $R_I$ koaxial angeordnet. Dabei sind die Innenrotoren 12 und 15 koaxial längs der gemeinsamen Drehachse $R_I$ angeordnet. Die Außenrotoren 13 und 16 können vorteilhafterweise ebenfalls koaxial längs einer gemeinsamen Drehachse angeordnet sein. Die bevorzugt gemeinsame Drehachse der Außenrotoren 13 und 16 erstreckt sich mit einer Exzentrizität parallel neben der Drehachse $R_I$, erstreckt sich also nicht in der dargestellten Längsschnittebene. Grundsätzlich können die Außenrotoren 13 und 16 aber auch jeweils eine eigene Drehachse aufweisen, wobei die Drehachse des einen Außenrotors zur Drehachse des anderen in Bezug auf die Drehachse $R_I$ um einem gewissen Drehwinkel versetzt wäre.

Die Förderkammern 4 und 5 erstrecken sich von der jeweiligen Stirnseite des Pumpengehäuses 1 aus in Richtung auf einen axial zentralen Bereich des Pumpengehäuses 1. Im zentralen Bereich weist das Pumpengehäuse 1 eine Gehäusestirnwand auf, die für die Förderkammern 4 und 5 jeweils eine innere Kammerstirnwand bildet. Von der zentralen Gehäusestirnwand aus bildet das Pumpengehäuse 1 für jede der Förderkammern 4 und 5 eine Umfangswand, die den jeweiligen Außenrotor 13 und 16 umgibt und über den Außenumfang des jeweiligen Außenrotors 13 und 16 mit diesem einen Gleitlagerspalt bildet.

Um die über den Umfang im jeweiligen Gleitlagerspalt erzeugte Reibleistung gering zu halten, sind die Rotorsätze 11 und 14 in axialer Richtung im Verhältnis zu ihrer radialen Erstreckung außergewöhnlich lang. Aufgrund der großen Länge und des im Gegenzug kleinen Außendurchmessers der Außenrotoren 13 und 16 verkleinern sich die Stirnflächen der Rotorsätze 11 und 14, so dass auch die Reibleistung bzw. der Reibverlust in den axialen Dichtspalten verringert wird. Als Maß für die Länge eignet sich insbesondere die in axialer Richtung gemessene Zahneingriffslänge der Rotoren des jeweiligen Rotorsatzes 11 und 14, da die Zahneingriffslänge das spezifische Fördervolumen des betreffenden Rotorsatzes mitbestimmt.

Der Gehäuseeinlass 2 und der Gehäuseauslass 3 sind jeweils am Umfang des Pumpengehäuses 1 angeordnet. Im Ausführungsbeispiel liegen sie sich über die Drehachse $R_I$ diametral gegenüber, sind also über den Umfang des Pumpengehäuses 1 um 180° zueinander winkelversetzt. Der Gehäuseeinlass 2 und der Gehäuseauslass 3 sind axial auf der Höhe der Gehäusestirnwand angeordnet.

Der Gehäuseeinlass 2 mündet am Umfang des Pumpengehäuses 1 in die radiale Richtung und erstreckt sich in radialer Richtung auf die Drehachse $R_I$ zu. In radialer Verlängerung des Gehäuseeinlasses 2 erstreckt sich eine zentrale Zuführung 2a bis axial zwischen die Förderkammern 4 und 5. Die Förderkammer 4 weist an ihrer der Förderkammer 5 axial zugewandten Stirnseite einen inneren Kammereinlass 6a auf. Die Förderkammer 5 weist an ihrer der Förderkammer 4 axial zugewandten Stirnseite einen inneren Kammereinlass 6b auf. Der Kammereinlass 6a und der Kammereinlass 6b zweigen jeweils in axialer Richtung von der zentralen Zuführung 2a ab. Die Förderkammern 4 und 5 werden somit an ihren einander zugewandten inneren Stirnseiten über den jeweiligen Kammereinlass 6a und 6b befüllt.

Der Gehäuseauslass 3 mündet am Umfang des Pumpengehäuses 1 in die radiale Richtung und erstreckt sich in radialer Richtung auf die Drehachse $R_I$ zu. In radialer Verlängerung des Gehäuseauslasses 3 erstreckt sich eine zentrale Abführung 3a bis axial zwischen die Förderkammern 4 und 5. Die Förderkammer 4 weist an ihrer der Förderkammer 5 axial zugewandten Stirnseite einen inneren Kammerauslass 8a auf. Die Förderkammer 5 weist an ihrer der Förderkammer 4 axial zugewandten Stirnseite einen inneren Kammerauslass 8b auf. Der Kammerauslass 8a und der Kammerauslass 8b münden jeweils in axialer Richtung in die zentrale Abführung 3a. Das Fluid wird somit an den einander zugewandten inneren Stirnseiten der Förderkammern 4 und 5 über den jeweiligen Kammerauslass 8a und 8b ausgeschoben.

Der Gehäuseeinlass 2 und der Gehäuseauslass 3 umgeben eine Achse S, die sich in Querrichtung zur Antriebswelle 40 und axial zwischen den Rotorsätzen 11 und 14 erstreckt. Im Ausführungsbeispiel weist die Querachse S radial zur Drehachse $R_I$. Sie kann die Drehachse $R_I$ aber auch mit einem geringen Abstand kreuzen. Der Zufluss für das Fluid kann von der äußeren Öffnung des Gehäuseeinlasses 2 bis zwischen die Kammereinlässe 6a und 6b gerade sein. Der Abfluss für das Fluid kann von der äußeren Öffnung des Gehäuseauslasses 3 bis zwischen die Kammerauslässe 8a und 8b gerade sein. Das Pumpengehäuse 1 und die darin aufgenommenen Rotorsätze 11 und 14 können in Bezug auf eine Querschnittsebene, in der sich die Querachse S erstreckt, spiegelsymmetrisch sein.

Stromab vom Gehäuseeinlass 2 zweigen von der zentralen Zuführung 2a ein in Figur 2 linker Zuführkanal 7a und rechter Zuführkanal 7b ab, um die Förderkammern 4 und 5 jeweils auch über ihre voneinander axial abgewandten äußeren Stirnseiten zu befüllen. Im Ausführungsbeispiel zweigen die Zuführkanäle 7a und 7b radial zwischen dem Gehäuseeinlass 2 und den Kammereinlässen 6a und 6b von der zentralen Zuführung 2a ab. Die Zuführkanäle 7a und 7b erstrecken sich jeweils von der zentralen Zuführung 2a in axialer Richtung nach links und rechts bis zu den Stirnseiten des Pumpengehäuses 1. Der Zuführkanal 7a mündet in den bereits in Figur 1 erkennbaren äußeren Kammereinlass 21 der Förderkammer 4, und der Zuführkanal 7b mündet in einen äußeren Kammereinlass 31 der Förderkammer 5. Die Kammereinlässe 21 und 31 sind jeweils muldenförmige Vertiefungen an den inneren Stirnseiten der Gehäusedeckel 20 und 30. In diesen Vertiefungen bzw. äußeren Kammereinlässen 21 und 31 strömt das Fluid zunächst nach radial innen und anschließend in axialer Richtung in die jeweilige Förderkammer 4 und 5. Eine beidseitige Befüllung wirkt der Kavitationsbildung im Saug- bzw. Niederdruckbereich der jeweiligen Förderkammer 4 und 5 entgegen.

Stromab der inneren Kammerauslässe 8a und 8b und stromauf des Gehäuseauslasses 2 münden ein in Figur 2 linker Abführkanal 9a und rechter Abführkanal 9b in die zentrale Abführung 3a, um die Förderkammern 4 und 5 jeweils auch über ihre voneinander axial abgewandten äußeren Stirnseiten zu entleeren. Im Ausführungsbeispiel münden die Abführkanäle 9a und 9b radial zwischen dem Gehäuseauslass 3 und den Kammerauslässen 8a und 8b in die zentrale Abführung 3a. Die Abführkanäle 9a und 9b erstrecken sich jeweils von der zentralen Abführung 3a in axialer Richtung nach links und rechts bis zu den Stirnseiten des Pumpengehäuses 1. Der Abführkanal 9a mündet in den bereits in Figur 1 erkennbaren äußeren Kammerauslass 22 der Förderkammer 4, und der Abführkanal 9b mündet in einen äußeren Kammerauslass 32 der Förderkammer 5. Die Kammerauslässe 22 und 32 sind jeweils muldenförmige Vertiefungen an den inneren Stirnseiten der Gehäusedeckel 20 und 30. In diesen Vertiefungen bzw. äußeren Kammerauslässen 22 und 32 strömt das Fluid zunächst nach radial außen, wird umgelenkt und strömt durch die Abführkanäle 9a und 9b und von dort in die zentrale Abführung 3a, aus der es über den Gehäuseauslass 3 in Richtung Verbraucher, beispielsweise einer mit dem Fluid zu kühlenden Traktionsbatterie eines rein elektrisch oder hybrid angetriebenen Kraftfahrzeugs, abströmt.

Das Pumpengehäuse 1 bildet axial zwischen den Rotorsätzen 11 und 14, im Bereich der zentralen Gehäusestirnwand, ein Wellenlager 10 zur Drehlagerung der Rotorsätze 11 und 14. Dabei bildet das Wellenlager 10 unmittelbar mit der Lagerhülse 41 für den ersten Rotorsatz 11 und der Lagerhülse 42 für den zweiten Rotorsatz 14 ein radiales Drehgleitlager. Die zentrale Zuführung 2a und/oder die zentrale Abführung 3a können sich jeweils bis nahe zum Wellenlager 10 bzw. bis nahe zu der das Wellenlager 10 bildenden Struktur des Pumpengehäuses 1 erstrecken. Entsprechend können die inneren Kammereinlässe 6a und 6b und/oder die inneren Kammerauslässe 8a und 8b radial unmittelbar an diese Wellenlagerstruktur grenzend geformt sein.

Günstige Strömungsverhältnisse bzw. geringe Strömungswiderstände ergeben sich im Niederdruckbereich des Pumpengehäuses 1 insbesondere dann, wenn der Zufluss von der Öffnung des Gehäuseeinlasses 2 bis zu den inneren Kammereinlässen 6a und 6b gerade ist, beispielsweise in radialer Richtung gerade ist. Im Hochdruckbereich des Pumpengehäuses 1 ergeben sich vorteilhafte Strömungsverhältnisse, d.h. niedrige Strömungswiderstände, insbesondere in Ausführungen, in denen die zentrale Abführung 3a und der Gehäuseauslass 3 von dessen äußeren Öffnung bis zu den inneren Kammerauslässen 8a und 8b gerade und vorteilhafterweise in radialer Richtung erstreckt sind. Durch solch eine Strömungsführung können kurze Strömungswege verwirklicht und zusätzlich die Fertigung erleichtert werden. Für die Fertigung, aber auch zur Erzielung kurzer Strömungswege ist es ferner vorteilhaft, wenn die von der zentralen Zuführung 2a links und rechts abzweigenden Zuführkanäle 7a und 7b und/oder die von der zentralen Abführung 3a links und rechts abzweigenden Abführkanäle 9a und 9b gerade und in axialer Richtung erstreckt sind. Die Zuführkanäle 7a und 7b und die Abführkanäle 9a und 9b können sich axial, in Richtung auf die Stirnseiten des Pumpengehäuses 1, in einem gewissen Maße aufweiten, beispielsweise konisch, um eine Formung in einem Gießverfahren zu erleichtern.

In Figur 2 ist ein elektrischer Antriebsmotor 45 angedeutet, der für den Drehantrieb der Rotorsätze 11 und 14 mit der Antriebswelle 40 gekoppelt ist. Der Antriebsmotor 45 bzw. ein den Antriebsmotor 45 aufnehmendes Motorgehäuse kann, wie ebenfalls in Figur 2 in Strichlinie angedeutet, in axialer Verlängerung an einer Stirnseite des Pumpengehäuses 1 befestigt oder stattdessen quer zur Antriebswelle 40 versetzt angeordnet und mit dem Pumpengehäuse 1 verbunden sein. Grundsätzlich kann ein Antriebsmotor 45 aber auch separat vom Pumpengehäuse 1 angeordnet und in geeigneter Weise mit der Antriebswelle 40 gekoppelt sein, beispielsweise über ein Getriebe. Bevorzugt wird jedoch eine koaxiale Anordnung, in der die Antriebswelle 40 unmittelbar auch die Motorwelle des Antriebsmotors 45 bildet oder mit der Motorwelle drehunbeweglich verbunden ist. Ein Antrieb über ein Getriebe, beispielsweise ein Stirnradgetriebe, eine Kette oder einen Riemen soll jedoch nicht ausgeschlossen sein.

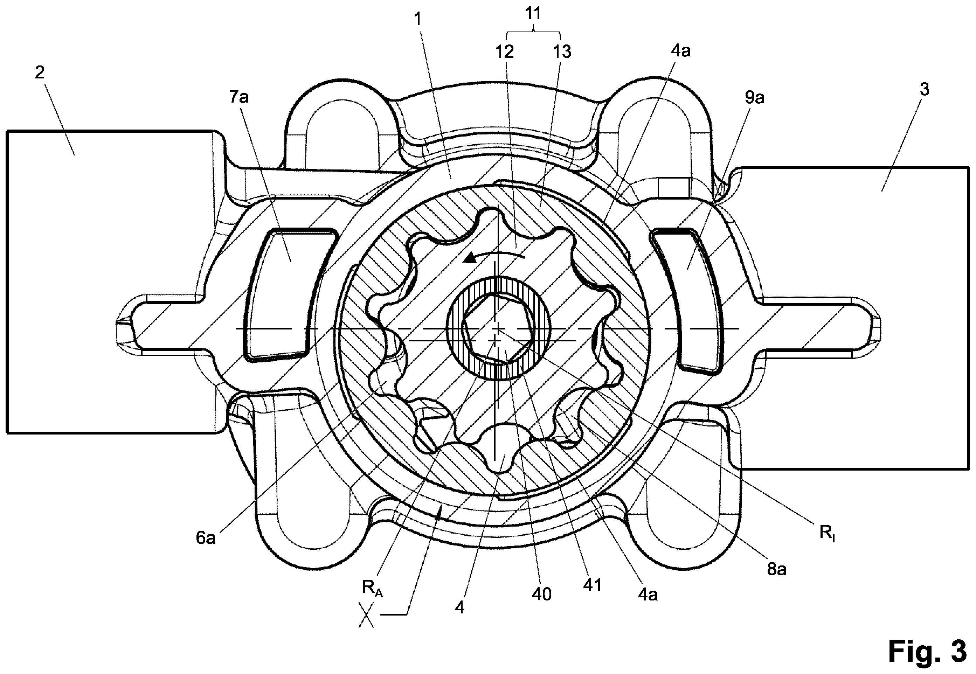

Figur 3 zeigt die Zahnradpumpe in einem Querschnitt im Bereich der Förderkammer 4 mit axialer Sicht auf den Gehäuseeinlass 2 und den Gehäuseauslass 3. Der Innenrotor 12 ist mit der Lagerhülse 41 reibschlüssig drehunbeweglich verbunden. Die Lagerhülse 41 ist mit der Antriebswelle 40 formschlüssig drehunbeweglich, vorzugsweise aber axial translatorisch beweglich verbunden. Beim anderen Rotorsatz 14 sind die Verhältnisse analog. Wird der Innenrotor 12 in die in Figur 3 durch den Richtungspfeil angedeutete Drehrichtung, beispielhaft gegen den Uhrzeigersinn, angetrieben, vergrößern sich die im Zahneingriff der Rotoren 12 und 13 gebildeten Förderzellen bei jeder Umdrehung im Niederdruckbereich der Förderkammer 4 und verkleinern sich anschließend wieder im Hochdruckbereich der Förderkammer 4. Der innere Kammereinlass 6a und der äußere Kammereinlass 21 (Figur 2) münden im Niederdruckbereich der Förderkammer 4. Der innere Kammerauslass 8a und der äußere Kammerauslass 22 (Figur 2) münden jeweils im Hochdruckbereich der Förderkammer 4. Das im Niederdruckbereich einströmende Fluid wird in der jeweiligen Förderzelle über einen Bereich geringsten Zahneingriffs in den

Hochdruckbereich gefördert und aufgrund der sich dort verkleinernden Förderzellen aus der Förderkammer 4 ausgestoßen. An den Hochdruckbereich schließt sich in Drehrichtung ein Bereich tiefsten Zahneingriffs an, nach dessen Durchlaufen sich die Förderzellen im Niederdruckbereich wieder vergrößern.

Wie bereits erwähnt, wird die Förderkammer 4 an ihrer der Förderkammer 5 axial zugewandten inneren Stirnseite von der zentralen Gehäusestirnwand und an ihrer von der Förderkammer 5 axial abgewandten äußeren Stirnseite vom Gehäusedeckel 20 begrenzt. Die zentrale Gehäusestirnwand begrenzt auch die Förderkammer 5 an ihrer der Förderkammer 4 axial zugewandten inneren Stirnseite, während der andere Gehäusedeckel 30 die Förderkammer 5 an ihrer von der Förderkammer 4 abgewandten äußeren Stirnseite axial begrenzt. Die zentrale Gehäusestirnwand und ebenso die Gehäusedeckel 20 und 30 weisen im Bereich des tiefsten Zahneingriffs des jeweiligen Rotorsatzes 11 und 14 und im Bereich des geringsten Zahneingriffs jeweils einen Trennsteg auf, um den Hochdruckbereich der jeweiligen Förderkammer 4 und 5 sowohl im Bereich des tiefsten Zahneingriffs als auch im Bereich des geringsten Zahneingriffs fluidisch vom Niederdruckbereich der jeweiligen Förderkammer 4 und 5 zu trennen.

In Figur 3 sind auch die exzentrisch zueinander erstreckten Drehachsen, nämlich die Drehachse $R_I$ der Antriebswelle 40 und der beiden Innenrotoren 12 und 15 einerseits und die hierzu exzentrische Drehachse $R_A$ der beiden Außenrotoren 13 und 16 eingetragen.

Die Außenrotoren, in Figur 3 der erste Außenrotor 13, sind an der Umfangswand der jeweiligen Förderkammer 4 und 5 gleitend drehbar gelagert. Die Umfangswand der jeweiligen Förderkammer 4 und 5 bildet somit über den Außenumfang des jeweiligen Außenrotors 13 und 16 ein radiales Drehgleitlager. Am Innenumfang der Umfangswand der ersten Förderkammer 4 sind Vertiefungen 4a geformt, in denen sich im Pumpenbetrieb Fluid sammelt. Am Innenumfang der Umfangswand der zweiten Förderkammer 5 sind ebensolche Vertiefungen geformt. Durch die Vertiefungen 4a und die Vertiefungen in der Umfangswand der Förderkammer 5 wird die Schmierung der sich im jeweiligen Drehgleitlager gegenüberliegenden Außenumfangsflächen der Außenrotoren 13 und 16 einerseits und Innenumfangsflächen der Förderkammern 4 und 5 andererseits verbessert. Insbesondere verringert sich das radiale Schergefälle des Fluids im Umfangsspalt im Bereich der jeweiligen Vertiefung, was wiederum zur Verringerung der Reibleistung beiträgt. Die Vertiefungen 4a können sich über die gesamte axiale Länge der Außenrotoren 13 und 16 erstrecken. Stattdessen können sie sich auch nur in jeweils eine axiale Richtung bis zum Stirnende des jeweiligen Außenrotors 13 und 16 erstrecken. In noch einer Alternative können sie jeweils als Tasche gebildet sein und in beide axialen Richtungen vor dem axialen Stirnende des jeweiligen Außenrotors 13 und 16 enden, so dass über den Außenumfang des jeweiligen Außenrotors 13 und 16 an beiden Stirnenden ein unterbrechungsfrei umlaufender Randstreifen verbleibt. Beispielhaft sind drei Vertiefungen 4a und entsprechende Vertiefungen am Innenumfang der zweiten Förderkammer 5 um die Drehachse $R_A$ gleichabständig verteilt vorgesehen.

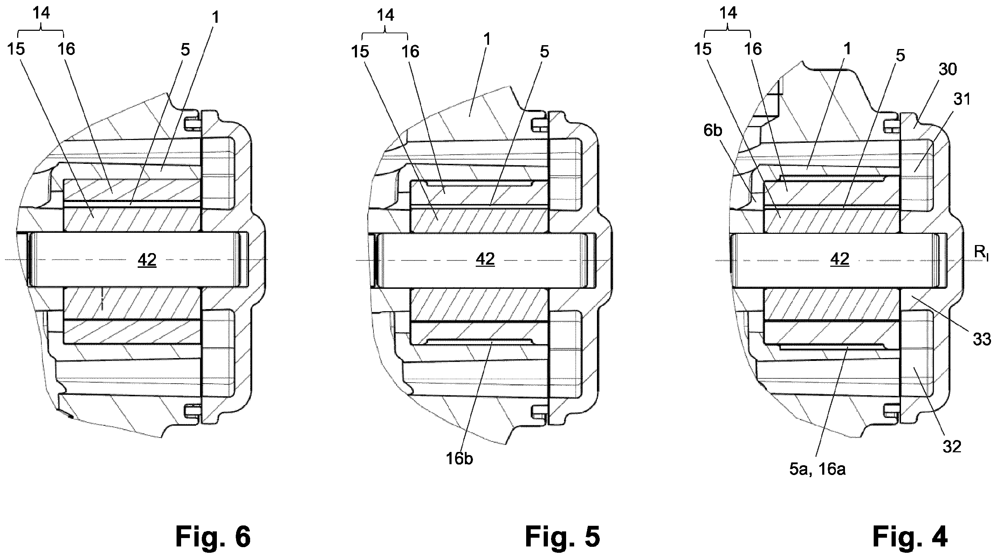

Figur 4 zeigt als weiteres Beispiel für die Verringerung der Reibleistung eine erste Variante einer Drehlagerung, wobei die Förderkammer 5 stellvertretend auch für die Förderkammer 4 dargestellt ist. In der ersten Variante weisen die Förderkammern 4 und 5 axial außen einen vergleichsweise weiten ersten bzw. äußeren Kammeraxialabschnitt 5a und hieran axial innen angrenzend einen demgegenüber radial engeren zweiten bzw. inneren Kammeraxialabschnitt auf. Die Außenrotoren 13 und 16 weisen entsprechend axial außen ebenfalls einen radial vergleichsweise weiten ersten bzw. äußeren Rotoraxialabschnitt und hieran axial innen angrenzend einen demgegenüber radial engeren zweiten bzw. inneren Rotoraxialabschnitt 16a auf. Im Ergebnis wird im inneren Axialabschnitt der jeweiligen Förderkammer 4 und 5 und im äußeren Axialabschnitt des jeweiligen Außenrotors 13 und 16 ein streifenförmiger Tragspalt und axial dazwischen ein radial vergleichsweise weiter Spalt erhalten, der sich mit Fluid füllen kann. Mit 5a ist der weite äußere Axialabschnitt der Förderkammer 5 und mit 16a ist der im Durchmesser reduzierte innere Axialabschnitt des Außenrotors 16 bezeichnet. Der Überlappungsbereich 5a, 16a wird axial innen und axial außen vom jeweiligen Tragspalt begrenzt.

Figur 5 zeigt eine zweite Variante der Drehlagerung zur Verringerung der Reibleistung, wobei die Förderkammer 5 wieder stellvertretend für die Förderkammer 4 dargestellt ist. In der zweiten Variante weist der Innenumfang des Pumpengehäuses 1, der die jeweilige Förderkammer 4 und 5 umgibt, über die Länge der Förderkammer 4 bzw. 5 einen konstanten Durchmesser auf. Die Außenrotoren 13 und 16 weisen an ihrem Außenumfang hingegen umlaufend jeweils eine Vertiefung auf, wobei in Figur 5 die Vertiefung 16b des zweiten Außenrotors 16 stellvertretend für eine gleiche Vertiefung beim Außenrotor 13 steht. Auch in der zweiten Variante werden somit zwei streifenförmig umlaufende Tragspalte und axial zwischen den Tragspalten ein radial vergleichsweise weiter Umlaufspalt erhalten, der sich mit dem Fluid füllen kann.

Figur 6 zeigt eine dritte Variante der Drehlagerung, wobei die Förderkammer 5 wieder stellvertretend für die Förderkammer 4 dargestellt ist. Die dritte Variante ist primär der Vollständigkeit wegen dargestellt. In der dritten Variante wird auf Maßnahmen zur

Verminderung der im Umlaufspalt verlustbehaftet erzeugten Reibleistung verzichtet. Die Außenrotoren 13 und 16 sind am Außenumfang über ihre gesamte Länge einfach kreiszylindrisch glatt. Ebenso sind die Förderkammern 4 und 5 am jeweiligen Innenumfang über ihre gesamte Länge einfach kreiszylindrisch glatt.

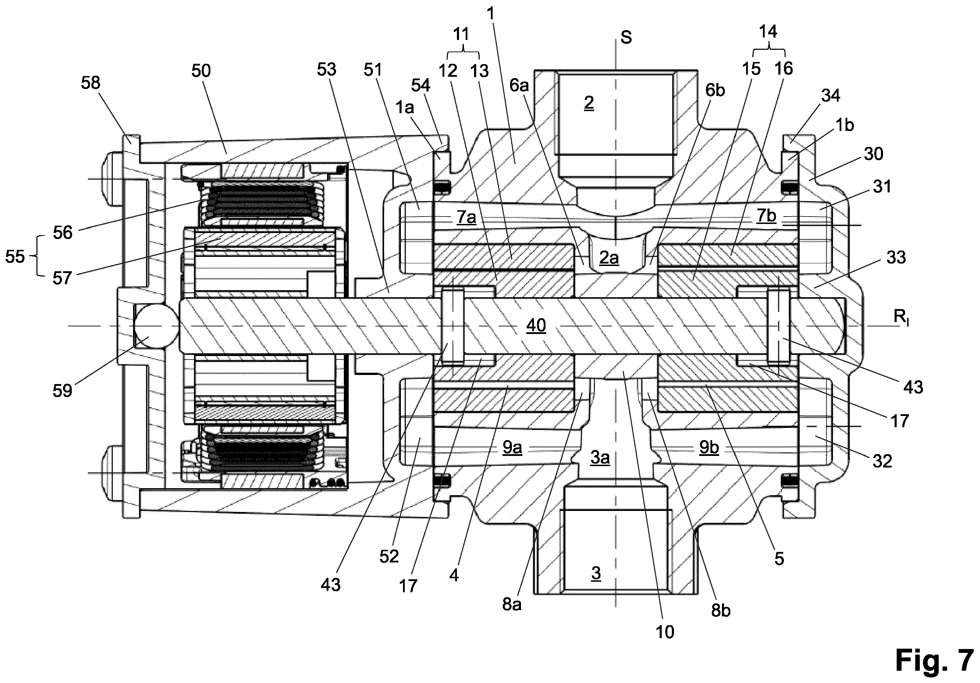

Figur 7 zeigt eine innenachsige Zahnradpumpe eines zweiten Ausführungsbeispiels in einem Längsschnitt, in dem sich die Drehachse $R_I$ der Antriebswelle 40 erstreckt. Das Pumpengehäuse 1 entspricht hinsichtlich der Fluidführung vom Gehäuseeinlass 2 bis zum Gehäuseauslass 3, jeweils einschließlich, und auch hinsichtlich der Förderkammern 4 und 5 funktional und geometrisch exakt dem Pumpengehäuse 1 des ersten Ausführungsbeispiels, so dass für die entsprechenden Gehäusestrukturen die gleichen Bezugszeichen wie im ersten Ausführungsbeispiel verwendet werden.

Ein erster Unterschied besteht an der Antriebsseite des Pumpengehäuses 1, an der die Antriebswelle 40 aus dem Pumpengehäuse 1 ragt. An der Antriebsseite ist ein elektrischer Antriebsmotor 55 koaxial zur Antriebswelle 40 angeordnet und mit dieser zur Übertragung von Drehmoment gekoppelt. Der Antriebsmotor 55 ist in einem Motorgehäuse 50 aufgenommen, das am Pumpengehäuse 1 befestigt ist.

Das Pumpengehäuse 1 weist an der Antriebsseite eine Zentrierstruktur 1a zur Zentrierung des Motorgehäuses 50 in Bezug auf die Drehachse $R_I$ der Antriebswelle 40 auf. Das Motorgehäuse 50 weist eine Zentriergegenstruktur 54 auf, die bei der Zentrierung des Motorgehäuses 50 mit der Zentrierstruktur 1a des Pumpengehäuses 1 zusammenwirkt. Die Zentrierstruktur 1a umfasst einen Außenumfang, der um die Drehachse $R_I$ umläuft. An der Zentriergegenstruktur 54, die beispielhaft von einem axial an der Stirnseite des Motorgehäuses 50 vorragenden Zentrierbund gebildet wird, ist ein Innenumfang geformt, der im montierten Zustand ebenfalls um die Drehachse $R_I$ umläuft. Der Außenumfang der Zentrierstruktur 1a und der Innenumfang der Zentriergegenstruktur 54 sind zueinander auf Passung gefertigt, so dass das Motorgehäuse 50 am Pumpengehäuse 1 in Bezug auf die Drehachse $R_I$ zentriert ist, wenn die Zentriergegenstruktur 54 die Zentrierstruktur 1a im Zentriereingriff umgreift. In einer Abwandlung kann die Zentrierstruktur 1a mit der Innenumfangsfläche und die Zentriergegenstruktur 54 mit der Außenumfangsfläche versehen sein, so dass die Zentrierstruktur 1a im abgewandelten Zentriereingriff die Zentriergegenstruktur 54 umgreift.

Das Motorgehäuse 50 umfasst eine Umfangswand, die einen Motorraum umgibt, und bildet an der Antriebsseite des Pumpengehäuses 1 eine Stirnwand für das Pumpengehäuse 1.

Diese Stirnwand weist dem Niederdruckbereich der ersten Förderkammer 4 axial gegenüberliegend einen muldenförmigen äußeren Kammereinlass 51 und dem Hochdruckbereich der Förderkammer 4 axial gegenüberliegend einen muldenförmigen äußeren Kammerauslass 52 auf. In Bezug auf den Kammereinlass 51 und den Kammerauslass 52 entspricht das Motorgehäuse 50 dem Gehäusedeckel 20 des ersten Ausführungsbeispiels. Wie im ersten Ausführungsbeispiel verbindet der äußere Kammereinlass 51 den Zuführkanal 7a mit dem Niederdruckbereich der Förderkammer 4, und der Kammerauslass 52 verbindet den Hochdruckbereich der Förderkammer 4 mit dem Abführkanal 9a.

Der Antriebsmotor 55 umfasst einen Stator 56, der drehunbeweglich mit dem Motorgehäuse 50 verbunden ist, und einen Rotor 57, der drehunbeweglich mit der Antriebswelle 40 verbunden ist. Die Antriebswelle 40 ist zugleich die Motorwelle des Antriebsmotors 55. In Abwandlungen können die Antriebswelle 40 und die Motorwelle über eine Kupplung miteinander verbunden sein. Vorteilhafterweise sind die Antriebwelle 40 und die Motorwelle aber auch in den Abwandlungen koaxial zueinander.

Die Antriebswelle 40 ragt durch die Stirnwand des Motorgehäuses 50 in den Motorraum frei vor. Das Motorgehäuse 50 bildet im Bereich der Stirnwand ein Wellenlager 53 für die Antriebswelle 40. Das Wellenlager 53 kann insbesondere als Radialgleitlager gebildet sein. Die Antriebswelle 40 ist in ihrem über das Wellenlager 53 in den Motorraum des Motorgehäuses 50 vorragenden Wellenabschnitt nicht weiter radial gestützt. Sie trägt den Rotor 57 des Antriebsmotors 55 somit fliegend.

Ein Motordeckel 58 verschließt das Motorgehäuse 50 an seiner dem Pumpengehäuse 1 axial abgewandten Stirnseite. Die Antriebswelle 40 kann am Motordeckel 58 axial abgestützt sein. Im Ausführungsbeispiel ist ein Zentrierelement 59, beispielsweise ein kugelförmiges Zentrierelement 59, in einer Aufnahme des Motordeckels 58 aufgenommen, und die Antriebswelle 40 stützt sich an diesem Zentrierelement 59 unmittelbar in axialem Kontakt ab.

Axial zwischen den Rotorsätzen 11 und 14 kann ein Wellenlager 10 vorgesehen sein. Das Wellenlager 10 kann wie im ersten Ausführungsbeispiel im Bereich der zentralen Stirnwand des Pumpengehäuses 1 gebildet und vorteilhafterweise als Radialgleitlager gebildet sein. Im Unterschied zum ersten Ausführungsbeispiel kann direkt die Antriebswelle 40 im Wellenlager 10 drehbar gelagert und radial gestützt sein.

Der Gehäusedeckel 30, der das Pumpengehäuse 1 an der vom Antriebsmotor 55 axial abgewandten Stirnseite verschließt, weist wie im ersten Ausführungsbeispiel den äußeren Kammereinlass 31 und den äußeren Kammerauslass 32 für die zweite Förderkammer 5 auf. Er weist ferner auch die Wellenaufnahme 33 auf, die als ein weiteres Wellenlager in Form eines radialen Drehgleitlagers gebildet sein kann. Insoweit entspricht der Gehäusedeckel 30 des zweiten Ausführungsbeispiels dem Gehäusedeckel 30 des ersten Ausführungsbeispiels. Ein Unterschied besteht lediglich darin, dass der Gehäusedeckel 30 genauer als im ersten Ausführungsbeispiel relativ zum Pumpengehäuse 1 in Bezug auf die Drehachse $R_I$ zentriert ist. Für die Zentrierung weisen das Pumpengehäuse 1 eine Zentrierstruktur 1b und der Gehäusedeckel 30 eine Zentriergegenstruktur 34 auf, die in einem Zentriereingriff miteinander sind und dadurch den Gehäusedeckel 30 relativ zum Pumpengehäuse 1 zentrieren.

Die Zentrierstruktur 1b umfasst einen Außenumfang, der um die Drehachse $R_I$ umläuft. An der Zentriergegenstruktur 34, die beispielhaft von einem axial an der Stirnseite des Gehäusedeckels 30 vorragenden Zentrierbund gebildet wird, ist ein Innenumfang geformt, der im montierten Zustand ebenfalls um die Drehachse $R_I$ umläuft. Der Außenumfang der Zentrierstruktur 1b und der Innenumfang der Zentriergegenstruktur 34 sind zueinander auf Passung gefertigt, so dass der Gehäusedeckel 30 am Pumpengehäuse 1 in Bezug auf die Drehachse $R_I$ zentriert ist, wenn die Zentriergegenstruktur 34 die Zentrierstruktur 1b im Zentriereingriff umgreift. In einer Abwandlung kann die Zentrierstruktur 1b mit der Innenumfangsfläche und die Zentriergegenstruktur 34 mit der Außenumfangsfläche versehen sein, so dass die Zentrierstruktur 1b im abgewandelten Zentriereingriff die Zentriergegenstruktur 34 umgreift.

Die Antriebswelle 40 ist im Bereich der Wellenaufnahme 33 am Gehäusedeckel 30 axial abgestützt.

Im zweiten Ausführungsbeispiel ist die Antriebswelle 40 im Wellenlager 53 und zusätzlich zwischen den Rotorsätzen 11 und 14 im Wellenlager 10 radial abgestützt. Wie bereits erwähnt, kann die Wellenaufnahme 33 ebenfalls ein radiales Drehgleitlager für die Antriebswelle 40 bilden. Ist die Wellenaufnahme 33 als Radiallager, d.h. als radiale Abstützung, gebildet, kann in einer Abwandlung auf das Wellenlager 10 verzichtet werden. Grundsätzlich würde auch eine Radiallagerung nur durch das Wellenlager 53 genügen. In anderen Abwandlungen kann die Antriebswelle 40 zusätzlich zur Abstützung im Wellenlager 53 an der vom Pumpengehäuse 1 axial abgewandten Seite radial abgestützt sein, beispielsweise am Motordeckel 58. Einer radial fliegenden Lagerung des Rotors 57 wird jedoch der Vorzug gegeben.

Im zweiten Ausführungsbeispiel wird auf die Lagerhülsen 41 und 42 des ersten Ausführungsbeispiels verzichtet. Für die Drehmitnahme ist die Antriebswelle 40 drehunbeweglich direkt mit dem ersten Innenrotor 12 und direkt mit dem zweiten Innenrotor 15 formschlüssig gekoppelt. Vorteilhafterweise sind die Innenrotoren 12 und 15 im jeweiligen Kopplungseingriff mit der Antriebswelle 40 relativ zur Antriebswelle 40 und relativ zueinander axial beweglich.

Die formschlüssige Kopplung bzw. Drehmitnahme wird durch den Eingriff von Querstiften in Nuten bewirkt. Zur Kopplung erstrecken sich Querstifte 43 durch die Antriebswelle 40. Die Innenrotoren 12 und 15 weisen jeweils an einem Innenumfang, mit dem sie die Antriebswelle 40 umgeben, zwei axiale Nuten 17 auf, in die der jeweilige Querstift 43 eingreift. Die Nuten 17 sind in enger Passung zu den Querstiften 43 geformt, um die formschlüssige Kopplung zu bewirken. Die Nuten 17 erstrecken sich von den voneinander axial abgewandten Stirnseiten der Innenrotoren 12 und 15 ein Stück weit in axialer Richtung aufeinander zu. Sie sind jeweils als Sacknut gebildet. Die drehunbewegliche Direktkopplung, vorzugsweise mittels der Querstifte 43 und Eingriffsnuten 17, erleichtert die Montage der Zahnradpumpe.

Das Pumpengehäuse 1 und das Motorgehäuse 50 können jetzt oder in einem späteren Schritt miteinander gefügt werden, beispielsweise mittels Schraubverbindung. In einem weiteren Schritt wird der zweite Rotorsatz 14 auf die Antriebswelle 40 und in das die zweite Förderkammer 5 bildende Volumen des Pumpengehäuses 1 geschoben. In diesem Zustand kann die Antriebswelle 40 axial um ein gewisses Maß angehoben bzw. verschoben werden, damit die Bohrung für den zweiten Querstift 43 freikommt und der zweite Querstift 43 durch die Antriebswelle 40 gesteckt werden kann. Anschließend wird die Antriebswelle 40 wieder axial zurückgeschoben, wodurch der zweite Querstift 43 mit den Nuten 17 des zweiten Innenrotors 15 in den verdrehgesicherten Eingriff gelangt. Danach werden der Gehäusedeckel 30 am Pumpengehäuse 1 und der Motordeckel 58 am Motorgehäuse 50 befestigt. Die Zahnradpumpe ist jetzt fertig montiert.

Von den erläuterten Unterschieden abgesehen entspricht die Zahnradpumpe des zweiten Ausführungsbeispiels der Zahnradpumpe des ersten Ausführungsbeispiels.

Die erfindungsgemäße Zahnradpumpe zeichnet sich insbesondere dadurch aus, dass die axiale Länge des jeweiligen Rotorsatzes 11 und 14, gemessen als Zahneingriffslänge, im Verhältnis zum Außendurchmesser des jeweiligen Außenrotors 13 und 16 außergewöhnlich groß ist. Dieses besondere Geometriemerkmal ist in den Figuren 2 und 7 ohne Weiteres erkennbar.

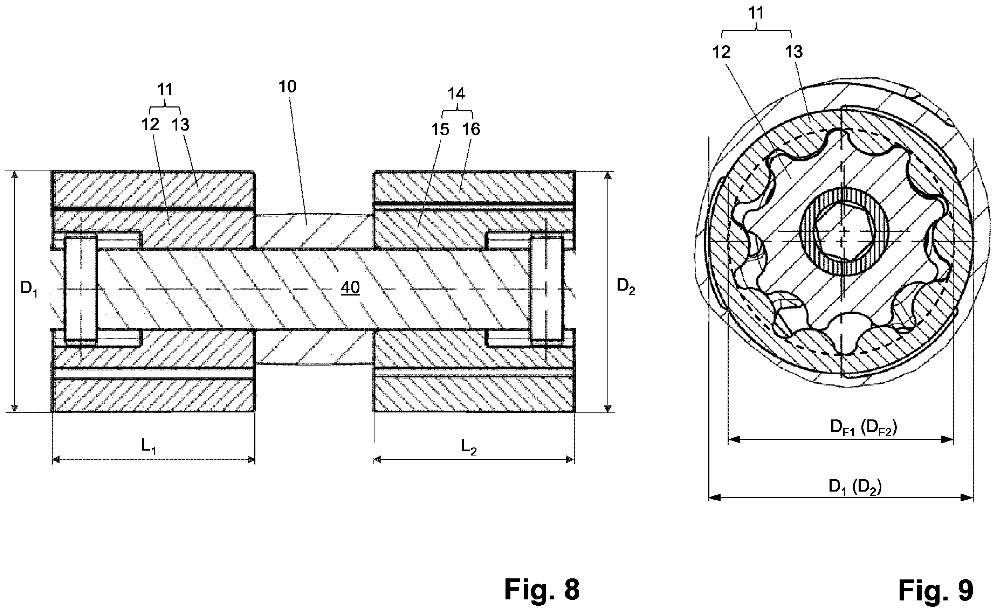

In Figur 8 sind die beiden Rotorsätze 11 und 14 des zweiten Ausführungsbeispiels (Figur 7) nur mit der Antriebswelle 40 und dem Wellenlager 10 dargestellt. Mit $L_1$ und $D_1$ sind die Zahneingriffslänge des ersten Rotorsatzes 11 und der Außendurchmesser des ersten Außenrotors 13 bezeichnet. Mit $L_2$ und $D_2$ sind die Zahneingriffslänge des zweiten Rotorsatzes 14 und der Außendurchmesser des zweiten Außenrotors 16 bezeichnet. Um die Reibleistung bei gegebenem spezifischen Fördervolumen zu vermindern und infolgedessen den Gesamtwirkungsgrad zu steigern, sind die Zahneingriffslängen $L_1$ und $L_2$ im Verhältnis zu den Außendurchmessern $D_1$ und $D_2$ gegenüber herkömmlichen Zahnradpumpen vergrößert.

Für den ersten Rotorsatz 11 gilt:

$$L_1 \geq 0,7 \cdot D_1 \text{ oder } L_1 \geq 0,8 \cdot D_1 \text{ oder } L_1 \geq 0,9 \cdot D_1$$

und für den zweiten Rotorsatz 14 gilt:

$$L_2 \geq 0,7 \cdot D_2 \text{ oder } L_2 \geq 0,8 \cdot D_2 \text{ oder } L_2 \geq 0,9 \cdot D_2.$$

Um Kavitation zu verhindern, ist es vorteilhaft, wenn für den ersten Rotorsatz 11 und den zweiten Rotorsatz 14 zusätzlich gilt:

$$L_1 \leq 1,5 \cdot D_1 \text{ oder } L_1 \leq 1,3 \cdot D_1$$

und

$$L_2 \leq 1,5 \cdot D_2 \text{ oder } L_2 \leq 1,3 \cdot D_2.$$

In vorteilhaften Ausführungen sind die Außendurchmesser $D_1$ und $D_2$ und/oder die Zahneingriffslängen $L_1$ und $L_2$ gleich. Die Rotoren 12 und 13 des ersten Rotorsatzes 11 und/oder die Rotoren 15 und 16 des zweiten Rotorsatzes 14 können axial gleich lang sein. Die über alles gemessene Länge der Rotoren 12 und 13 des ersten Rotorsatzes 11 können der Zahneingriffslänge $L_1$ entsprechen. Die jeweils über alles gemessene Länge der Rotoren 15 und 16 des zweiten Rotorsatzes 14 können der Zahneingriffslänge $L_2$ entsprechen.

Figur 9 zeigt im Wesentlichen nur die Rotoren 12 und 13 des ersten Rotorsatzes 11. Diese Detaildarstellung ist der Figur 3 entnommen. $D_1$ bezeichnet wieder den Außendurchmesser des ersten Außenrotors 13. Mit $D_{F1}$ ist der Durchmesser des Fußkreises des ersten Außenrotors 13 bezeichnet. Für den Außendurchmesser des Außenrotors 13 und den Fußkreisdurchmesser des Außenrotors 13 kann insbesondere zumindest eine der folgenden Relationen gelten:

$$D_1 \leq 2 \cdot D_{F1} \text{ oder } D_1 \leq 1,5 \cdot D_{F1}.$$

In Klammern sind in Figur 9 der Außendurchmesser $D_2$ des zweiten Außenrotors 16 und der Fußkreisdurchmesser $D_{F2}$ des zweiten Außenrotors 16 eingetragen. Insoweit steht die Abbildung des ersten Rotorsatzes 11 stellvertretend für den zweiten Rotorsatz 14. Im zweiten Rotorsatz 14 gilt für den Außendurchmesser und den Fußkreisdurchmesser des zweiten Außenrotors 16 vorteilhafterweise:

$$D_2 \leq 2 \cdot D_{F2} \text{ oder } D_2 \leq 1,5 \cdot D_{F2}.$$

Die Ausführungen zu den Abmessungen der Rotoren 12, 13, 15 und 16 gelten für beide Ausführungsbeispiele. Die Rotorsätze 11 und 14 der Ausführungsbeispiele unterscheiden sich nur hinsichtlich der Kopplung mit der Antriebswelle 40, indem die Innenrotoren 12 und 15 im ersten Ausführungsbeispiel über die Lagerhülsen 41 und 42 und im zweiten Ausführungsbeispiel direkt auf der Antriebswelle 40 angeordnet sind.

In vorteilhaften Ausführungen sind die Innenrotoren 12 und 13 gleich und/oder die Außenrotoren 13 und 16 gleich. Im jeweiligen Ausführungsbeispiel können in derartigen Ausführungen die Innenrotoren 12 und 15 gegeneinander und/oder die Außenrotoren 13 und 16 gegeneinander ausgetauscht werden.

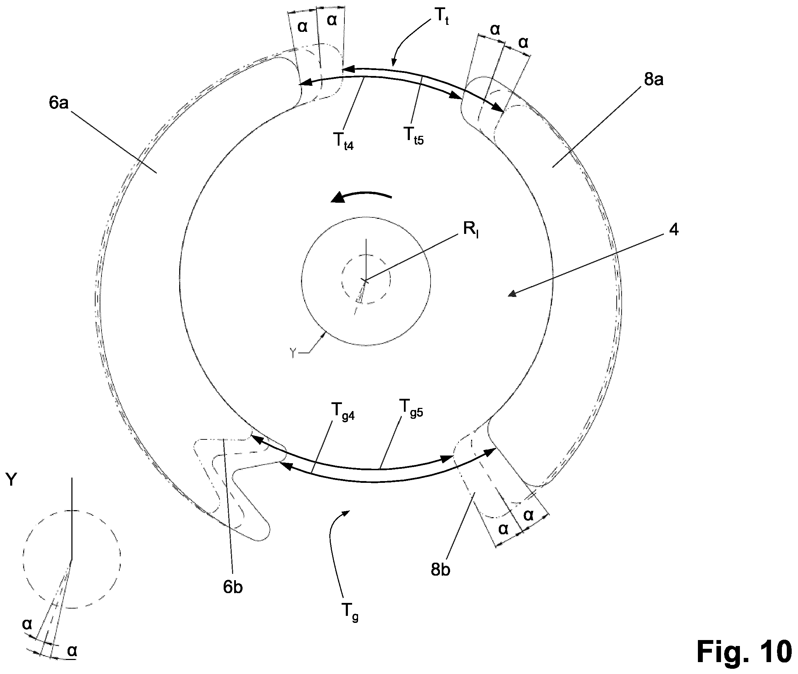

Figur 10 ist eine Stirnsicht auf die innere Stirnwand der ersten Förderkammer 4. In dieser Stirnwand erstrecken sich der innere Kammereinlass 6a und der innere Kammerauslass 8a. Der Kammereinlass 6a erstreckt sich im Niederdruckbereich der Förderkammer 4 nierenförmig um die Drehachse $R_I$, und der Kammerauslass 8a erstreckt sich über die Drehachse $R_I$ gegenüberliegend im Hochdruckbereich der Förderkammer 4 ebenfalls nierenförmig um die Drehachse $R_I$. Die Stirnwand bildet im Bereich des tiefsten Zahneingriffs (Figur 3) einen Trennsteg $T_{t4}$ und im Bereich des geringsten Zahneingriffs einen Trennsteg $T_{g4}$. Die Trennstege erstrecken sich jeweils in Umfangsrichtung zwischen dem Kammereinlass 6a und dem Kammerauslass 8a und bilden mit der zugewandten Stirnseite der Rotoren 12 und 13 jeweils einen axialen Dichtspalt, um den Hochdruckbereich im Pumpenbetrieb vom Niederdruckbereich der Förderkammer 4 fluidisch zu trennen.

Die vom Pumpengehäuse 1 gebildete innere Stirnwand der Förderkammer 4 ist zugleich auch eine innere Stirnwand der Förderkammer 5 (Figuren 2 und 7). In der Stirnwand münden an der von der Förderkammer 4 abgewandten anderen Stirnseite der innere Kammereinlass 6b und der innere Kammerauslass 8b der zweiten Förderkammer 5, wie beispielsweise in den Figuren 2 und 7 erkennbar ist. Der innere Kammereinlass 6b und der innere Kammerauslass 8b der zweiten Förderkammer 5 sind in Figur 10 in Strichlinie dargestellt. Die Kammereinlässe 6a und 6b sind dem Umriss nach vorzugsweise gleich. Die Kammerauslässe 8a und 8b sind dem Umriss nach bevorzugt ebenfalls gleich.

In der axialen Sicht der Figur 10 überlappen der innere Kammereinlass 6a und der innere Kammereinlass 6b weitgehend. Ebenso überlappen weitgehend auch die inneren Kammerauslässe 8a und 8b. Allerdings sind die Trennstege der beiden Förderkammern 4 und 5 in Umfangsrichtung zueinander versetzt. Der Winkelversatz beträgt $2\alpha$, gemessen als Bogenwinkel um die Drehachse $R_I$ der Antriebswelle 40. Entsprechend sind die Drehwinkelposition des Kammereinlasses 6b zum Kammereinlass 6a und die Drehwinkelposition des Kammerauslasses 8b zum Kammerauslass 8a in Bezug auf die Drehachse $R_I$ um den Winkel $2\alpha$ versetzt. Die beiden Trennstege $T_{t4}$ und $T_{g4}$ sind hinsichtlich ihrer Erstreckung in Umfangsrichtung mit in Umfangsrichtung erstreckten Doppelpfeilen bzw. Erstreckungspfeilen kenntlich gemacht. Mit jeweils einem Erstreckungspfeil sind in der Überlagerung der Figur 10 auch der im Bereich des tiefsten Zahneingriffs gelegene Trennsteg $T_{t5}$ und der im Bereich des geringsten Zahneingriffs gelegene Trennsteg $T_{g5}$ der zweiten Förderkammer 5 dargestellt. Im Vergleich der Erstreckungspfeile ist der Winkelversatz deutlich erkennbar. Zusätzlich ist der Winkelversatz im Vergleich zu einem Nullversatz angegeben. In Bezug auf die Drehwinkelposition ohne Versatz (Nullversatz) sind der Kammereinlass 6a und der Kammerauslass 8a der Förderkammer 4 in die eine Umfangsrichtung um den Winkel $\alpha$ und der Kammereinlass 6b und der Kammerauslass 8b der zweiten Förderkammer 5 in die andere Umfangsrichtung um ebenfalls den Winkel $\alpha$ versetzt.

Die vom Gehäusedeckel 20 oder dem Motorgehäuse 50 gebildeten Trennstege der äußeren Stirnwand der ersten Förderkammer 4 fluchten axial mit den Trennstegen $T_{t4}$ und $T_{g4}$. Ebenso bildet der Gehäusedeckel 30 an der äußeren Stirnwand der zweiten Förderkammer 5 zwei Trennstege, die axial in der Flucht zu den Trennstegen $T_{t5}$ und $T_{g5}$ liegen. Die Trennstege an diesen äußeren Stirnwänden der Förderkammern 4 und 5 weisen somit relativ zueinander den gleichen Winkelversatz $2\alpha$ auf.

Der Winkelversatz $2\alpha$ ist in der ersten Förderkammer 4 vorteilhafterweise kleiner als eine in Umfangsrichtung auf dem Teilkreis gemessene Zahnbreite des ersten Außenrotors 13. In der zweiten Förderkammer 5 ist der Winkelversatz $2\alpha$ vorteilhafterweise kleiner als eine in Umfangsrichtung auf dem Teilkreis gemessene Zahnbreite des zweiten Außenrotors 16. In vorteilhaften Ausführungen ist der Winkelversatz $2\alpha$ in der jeweiligen Förderkammer 4 und 5 kleiner als Dreiviertel der auf dem Teilkreis gemessene Zahnbreite des jeweiligen Außenrotors 13 und 16. Der Winkelversatz $2\alpha$ beträgt vorteilhafterweise in der ersten Förderkammer 4 wenigstens ein Viertel der auf dem Teilkreis gemessenen Zahnbreite des ersten Außenrotors 12 und/oder in der zweiten Förderkammer 5 vorteilhafterweise wenigstens ein Viertel der auf dem Teilkreis gemessenen Zahnbreite des zweiten Außenrotors 16. Besonders günstig ist es, wenn der Winkelversatz $2\alpha$ einem Drittel der in Umfangsrichtung auf dem Teilkreis gemessenen Zahnbreite des ersten Außenrotors 12 und/oder einem Drittel der in Umfangsrichtung auf dem Teilkreis gemessenen Zahnbreite des zweiten Außenrotors 14 entspricht. Die Außenrotoren 13 und 16 können sich hinsichtlich der Innenverzahnung voneinander unterscheiden, vorzugsweise sind die beiden Innenverzahnungen jedoch gleich. Entsprechendes gilt für die Außenverzahnungen der Innenrotoren 12 und 15.

Durch den Winkelversatz der Trennstege und dementsprechend der Kammereinlässe und Kammerauslässe der ersten Förderkammer 4 zur zweiten Förderkammer 5 wird der Ausschiebevorgang des Rotorsatzes 11 relativ zum Rotorsatz 14 dem Winkelversatz $2\alpha$ entsprechend phasenverschoben. Entsprechend wird der über der Drehwinkelposition aufgetragene Druck im Hochdruckbereich der ersten Förderkammer 4 zum Druckverlauf in der zweiten Förderkammer 5 um den Winkelversatz $2\alpha$ phasenverschoben. Gegenüber einer Zahnradpumpe ohne Winkelversatz ergibt sich ein gleichmäßigerer Druckverlauf.

Anstelle des erfindungsgemäßen Winkelversatzes der Trennstege bzw. der Kammereinlässe einerseits und Kammerauslässe andererseits könnten die Rotorsätze 11 und 14 mit einem Winkelversatz zueinander angeordnet werden. Ein Winkelversatz der Trennstege hat jedoch den Vorteil, dass bei den Rotorsätzen keine Vorkehrungen getroffen werden müssen, um eine korrekte, winkelversetzte Anordnung zu gewährleisten.

Bezugszeichen:

| | |
|---|---|
| 1 | Pumpengehäuse |
| 1a | Zentrierstruktur |
| 1b | Zentrierstruktur |
| 2 | Gehäuseeinlass |
| 2a | Zuführung |
| 3 | Gehäuseauslass |
| 3a | Abführung |
| 4 | erste Förderkammer |
| 4a | Vertiefung |
| 5 | zweite Förderkammer |
| 5a | Kammeraxialabschnitt |
| 6a | Kammereinlass, innen |
| 6b | Kammereinlass, innen |
| 7a | Zuführkanal |
| 7b | Zuführkanal |
| 8a | Kammerauslass, innen |
| 8b | Kammerauslass, innen |
| 9a | Abführkanal |
| 9b | Abführkanal |
| 10 | Wellenlager |
| 11 | erster Rotorsatz |

| | |
|---|---|
| 12 | erster Innenrotor |
| 13 | erster Außenrotor |
| 13a | Vertiefung |
| 14 | zweiter Rotorsatz |
| 15 | zweiter Innenrotor |
| 16 | zweiter Außenrotor |
| 16a | Rotoraxialabschnitt |
| 16b | Vertiefung |
| 17 | Drehmitnahme, Nut |
| | |
| 20 | Gehäusedeckel |
| 21 | Kammereinlass, außen |
| 22 | Kammerauslass, außen |
| 23 | Wellenaufnahme |
| 24 | - |
| 25 | Dichtung |
| | |
| 30 | Gehäusedeckel |
| 31 | Kammereinlass, außen |
| 32 | Kammerauslass, außen |
| 33 | Wellenaufnahme |
| 34 | Zentriergegenstruktur, Zentrierbund |
| 35 | Dichtung |
| | |
| 40 | Antriebswelle |
| 41 | Lagerhülse |
| 42 | Lagerhülse |
| 43 | Drehmitnahme, Querstift |
| 44 | - |
| 45 | Antriebsmotor |
| | |
| 50 | Motorgehäuse |
| 51 | Kammereinlass, außen |
| 52 | Kammerauslass, außen |
| 53 | Wellenlager |
| 54 | Zentriergegenstruktur, Zentrierbund |
| 55 | Antriebsmotor |
| 56 | Stator |
| 57 | Rotor |
| 58 | Motordeckel |
| 59 | Zentrierelement |
| | |
| $2\alpha$ | Winkelversatz |
| $D_1$ | Außendurchmesser Außenrotor |
| $D_2$ | Außendurchmesser Außenrotor |
| $D_{K1}$ | Kopfkreisdurchmesser Innenrotor |
| $D_{K2}$ | Kopfkreisdurchmesser Innenrotor |
| $L_1$ | Zahneingriffslänge |
| $L_2$ | Zahneingriffslänge |
| $R_A$ | Drehachse Außenrotor |
| $R_I$ | Drehachse Innenrotor |
| S | Querachse |
| $T_{t4}$ | Trennsteg |
| $T_{t5}$ | Trennsteg |
| $T_{g4}$ | Trennsteg |
| $T_{g5}$ | Trennsteg |

**Patentansprüche**

1. Zahnradpumpe zur Förderung eines hydraulischen Fluids, beispielsweise eines Kühlfluids und/oder eines Schmierfluids, die Zahnradpumpe umfassend:

   1.1   ein Pumpengehäuse (1) mit einem Gehäuseeinlass (2) und einem Gehäuseauslass (3) für das Fluid, einer mit dem Gehäuseeinlass (2) und dem Gehäuseauslass (3) verbundenen ersten Förderkammer (4) und zweiten Förderkammer (5),

   1.2   eine Antriebswelle (40),

   1.3   einen mit der Antriebswelle (40) gekoppelten und in der ersten Förderkammer (4) drehbaren innenachsigen ersten Rotorsatz (11), der einen außenverzahnten ersten Innenrotor (12) und einen innenverzahnten ersten Außenrotor (13) aufweist, die in einem ersten Zahneingriff sind, um Fluid vom Gehäuseeinlass (2) zum Gehäuseauslass (3) zu fördern, und

   1.4   einen mit der Antriebswelle (40) gekoppelten und in der zweiten Förderkammer (5) drehbaren innenachsigen zweiten Rotorsatz (14), der einen außenverzahnten zweiten Innenrotor (15) und einen innenverzahnten zweiten Außenrotor (16) aufweist, die in einem zweiten Zahneingriff sind, um Fluid zu fördern, wobei

   1.5   eine axiale Eingriffslänge ($L_1$) des ersten Zahneingriffs wenigstens dem 0,7-fachen des Außendurchmessers ($D_1$) des ersten Außenrotors (13) und/oder

   1.6   eine axiale Eingriffslänge ($L_2$) des zweiten Zahneingriffs wenigstens dem 0,7-fachen des Außendurchmessers ($D_2$) des zweiten Außenrotors (16) entspricht.

2. Zahnradpumpe nach dem vorhergehenden Anspruch, wobei die axiale Eingriffslänge ($L_1$) des ersten Zahneingriffs höchstens dem 1,5-fachen oder 1,3-fachen des Außendurchmessers ($D_1$) des ersten Außenrotors (13) und/oder die axiale Eingriffslänge ($L_2$) des zweiten Zahneingriffs höchstens dem 1,5-fachen oder 1,3-fachen des Außendurchmessers ($D_2$) des zweiten Außenrotors (16) entspricht oder jeweils entsprechen.

3. Zahnradpumpe nach einem der vorhergehenden Ansprüche, wobei der Außendurchmesser ($D_1$) des ersten Außenrotors (13) höchstens dem 2-fachen oder 1,5-fachen des Fußkreisdurchmessers ($D_{F1}$) des ersten Außenrotors (13) und/oder wobei der Außendurchmesser ($D_2$) des zweiten Außenrotors (16) höchstens dem 2-fachen oder 1,5-fachen des Fußkreisdurchmessers ($D_{F2}$) des zweiten Außenrotors (16) entspricht oder jeweils entsprechen.

4. Zahnradpumpe nach einem der vorhergehenden Ansprüche, wobei der zweite Rotorsatz (14) mit dem ersten Rotorsatz (11) hydraulisch parallelgeschaltet ist, um ebenfalls Fluid vom Gehäuseeinlass (2) zum Gehäuseauslass (3) zu fördern.

5. Zahnradpumpe nach einem der vorhergehenden Ansprüche, wobei

   - eine Stirnseite der ersten Förderkammer (4) einer Stirnseite der zweiten Förderkammer (5) axial zugewandt gegenüberliegt,
   - das Pumpengehäuse (1) eine mit dem Gehäuseeinlass (2) verbundene Zuführung (2a) und eine mit dem Gehäuseauslass (3) verbundene Abführung (3a) aufweist und
   - sich die Zuführung (2a) und/oder die Abführung (3a) bis zwischen die einander zugewandten Stirnseiten der Förderkammern (4, 5) erstreckt oder erstrecken.

6. Zahnradpumpe nach einem der vorhergehenden Ansprüche, wobei

   - eine Stirnseite der ersten Förderkammer (4) einer Stirnseite der zweiten Förderkammer (5) axial zugewandt gegenüberliegt und
   - der Gehäuseeinlass (2) an einer Umfangswand des Gehäuses (1) vorgesehen ist und eine virtuelle Gerade (S) umgibt, die sich zwischen den einander zugewandten Stirnseiten der Förderkammern (4, 5) orthogonal zu einer Drehachse ($R_I$, $R_A$) des ersten Rotorsatzes (11) und/oder des zweiten Rotorsatzes (14) erstreckt, und/oder
   - der Gehäuseauslass (3) an einer Umfangswand des Gehäuses (1) vorgesehen ist und eine virtuelle Gerade (S) umgibt, die sich zwischen den einander zugewandten Stirnseiten der Förderkammern (4, 5) orthogonal zu einer Drehachse ($R_I$, $R_A$) des ersten Rotorsatzes (11) und/oder des zweiten Rotorsatzes (14) erstreckt.

7. Zahnradpumpe nach einem der vorhergehenden Ansprüche, wobei wenigstens einer der Rotorsätze (11, 14) an beiden Stirnseiten mit dem Fluid befüllbar und/oder das Fluid an beiden Stirnseiten wenigstens eines der Rotorsätze (11, 14) ausschiebbar ist.

8. Zahnradpumpe nach einem der vorhergehenden Ansprüche, wobei der erste Innenrotor (12) und/oder der zweite Innenrotor (15) drehunbeweglich mit der Antriebswelle (40) verbunden, vorzugsweise form- und/oder reibschlüssig mit der Antriebswelle (40) gefügt, ist oder sind.

9. Zahnradpumpe nach dem vorhergehenden Anspruch, wobei

   - der erste Innenrotor (12) und/oder der zweite Innenrotor (15) die Antriebswelle (40) umgibt oder umgeben,
   - der erste Innenrotor (12) und/oder der zweite Innenrotor (15) in der Überlappung mit der Antriebswelle (40) an einem Innenumfang eine Nut (17) aufweist oder jeweils aufweisen und
   - die Antriebswelle (40) mit einem Querstift (43) versehen ist, der von einem Außenumfang der Antriebswelle (40) vorragt und in die Nut (17) des ersten Innenrotors (12) und/oder die Nut (17) des zweiten Innenrotors (15) ragt,
   - so dass der jeweilige Innenrotor (12; 15) im Eingriff des Querstifts (43) und der Nut (17) drehunbeweglich mit der Antriebswelle (40) verbunden ist.

10. Zahnradpumpe nach einem der vorhergehenden Ansprüche, umfassend einen elektrischen Antriebsmotor (55) mit einem Stator (56) und einem Rotor (57), der drehunbeweglich auf oder an der Antriebswelle (40) montiert, vorzugsweise form- und/oder reibschlüssig mit der Antriebswelle (40) gefügt ist, wobei die Antriebswelle (40) den Rotor (57) vorzugsweise radial fliegend lagert.

11. Zahnradpumpe nach dem vorhergehenden Anspruch, wobei

   - der Antriebsmotor (55) in einem Motorgehäuse (50) angeordnet ist,
   - die Antriebswelle (40) durch eine Stirnwand ragt, die sich axial zwischen dem Pumpengehäuse (1) und dem Motorgehäuse (50) erstreckt, und
   - die Stirnwand ein Wellenlager (53), vorzugsweise ein Radialgleitlager, für die Antriebswelle (40) bildet.

12. Zahnradpumpe nach einem der vorhergehenden Ansprüche, wobei die Antriebswelle (40) in einem Wellenlager (10) des Pumpengehäuses (1) axial zwischen den Rotorsätzen (11, 14) drehbar gelagert ist, wobei das Wellenlager (10) vorzugsweise ein Radialgleitlager ist.

13. Zahnradpumpe nach einem der vorhergehenden Ansprüche, wobei

   - die erste Förderkammer (4) einen Niederdruckbereich, einen Hochdruckbereich und in Umfangsrichtung zwischen dem Niederdruckbereich und dem Hochdruckbereich einen Trennsteg ($T_{t4}$) aufweist, um den Hochdruckbereich und den Niederdruckbereich der ersten Förderkammer (4) fluidisch voneinander zu trennen,
   - die zweite Förderkammer (5) einen Niederdruckbereich, einen Hochdruckbereich und in Umfangsrichtung zwischen dem Niederdruckbereich und dem Hochdruckbereich einen Trennsteg ($T_{t5}$) aufweist, um den Hochdruckbereich und den Niederdruckbereich der zweiten Förderkammer (5) fluidisch voneinander zu trennen, und wobei
   - der Trennsteg ($T_{t4}$) der ersten Förderkammer (4) zum Trennsteg ($T_{t5}$) der zweiten Förderkammer (5) in Umfangsrichtung um eine Drehachse ($R_l$) des ersten Rotorsatzes (11) und/oder des zweiten Rotorsatzes (14) gemessen einen Winkelversatz ($2\alpha$) aufweist, so dass bei Drehung der Rotorsätze (11, 14) der pro Umdrehung stattfindende Ausschiebevorgang des ersten Rotorsatzes (11) und der pro Umdrehung stattfindende Ausschiebevorgang des zweiten Rotorsatzes (14) dem Winkelversatz ($2\alpha$) entsprechend phasenverschoben sind.

14. Zahnradpumpe nach dem vorhergehenden Anspruch, wobei der Winkelversatz ($2\alpha$) wenigstens ein Viertel und höchstens drei Viertel einer in Umfangsrichtung auf dem Teilkreis gemessenen Zahnbreite des ersten Außenrotors (13) und/oder wenigstens ein Viertel und höchstens drei Viertel einer in Umfangsrichtung auf dem Teilkreis gemessenen Zahnbreite des zweiten Außenrotors (16) beträgt.

15. Zahnradpumpe nach einem der vorhergehenden Ansprüche, die zur Förderung eines Kühl- und/oder Schmierfluids in einem Kühl- und/oder Schmierkreis eines elektrisch und/oder verbrennungsmotorisch angetriebenen Kraftfahrzeugs, vorzugsweise zur Förderung eines Kühlfluids zur Direktkühlung einer Fahrzeugtraktionsbatterie, verwendet

wird.

Fig. 1

**Fig. 2**

EP 4 692 550 A1

EP 4 692 550 A1

**Fig. 3**

**Fig. 6**

**Fig. 5**

**Fig. 4**

EP 4 692 550 A1

**Fig. 7**

EP 4 692 550 A1

**Fig. 8**

**Fig. 9**

EP 4 692 550 A1

Fig. 10

**Europäisches Patentamt**
**European Patent Office**
**Office européen des brevets**

## EUROPÄISCHER RECHERCHENBERICHT

Nummer der Anmeldung

EP 25 19 3236

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 11 2015 005074 T5 (AISIN SEIKI [JP]) 27. Juli 2017 (2017-07-27) | 1-12,15 | INV. F04C2/10 |
| Y | * Absatz [0028] - Absatz [0044]; Abbildungen 1-3 * | 13,14 | F04C11/00 F04C15/06 |
| | ----- | | |
| Y | GB 2 443 089 A (CONCENTRIC VFP LTD [GB]) 23. April 2008 (2008-04-23) * Seite 2, Zeile 6 - Zeile 12; Abbildungen 1,2 * | 13,14 | |
| | ----- | | |
| X | EP 2 868 927 A1 (MIKUNI KOGYO KK [JP]) 6. Mai 2015 (2015-05-06) * Absatz [0012] - Absatz [0033]; Abbildungen 1-8 * | 1-3,8,9, 15 | |
| | ----- | | |
| A | US 2024/240635 A1 (DEARDEN LEO [GB]) 18. Juli 2024 (2024-07-18) * das ganze Dokument * | 1-15 | |
| | ----- | | |

**RECHERCHIERTE SACHGEBIETE (IPC)**

F04C

Der vorliegende Recherchenbericht wurde für alle Patentansprüche erstellt

| Recherchenort | Abschlußdatum der Recherche | Prüfer |
|---|---|---|
| München | 26. November 2025 | Alquezar Getan, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

# EP 4 692 550 A1

## ANHANG ZUM EUROPÄISCHEN RECHERCHENBERICHT
## ÜBER DIE EUROPÄISCHE PATENTANMELDUNG NR.

EP 25 19 3236

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-11-2025

| Im Recherchenbericht angeführtes Patentdokument | Datum der Veröffentlichung | Mitglied(er) der Patentfamilie | Datum der Veröffentlichung |
|---|---|---|---|
| DE 112015005074 T5 | 27-07-2017 | DE 112015005074 T5 | 27-07-2017 |
| | | JP 2016089769 A | 23-05-2016 |
| | | WO 2016072418 A1 | 12-05-2016 |
| GB 2443089 A | 23-04-2008 | KEINE | |
| EP 2868927 A1 | 06-05-2015 | CN 104302918 A | 21-01-2015 |
| | | EP 2868927 A1 | 06-05-2015 |
| | | JP 6027768 B2 | 16-11-2016 |
| | | JP 2013238209 A | 28-11-2013 |
| | | US 2015118087 A1 | 30-04-2015 |
| | | WO 2013172409 A1 | 21-11-2013 |
| US 2024240635 A1 | 18-07-2024 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019118708 A1
- DE 3307790 A1
- DE 102021207694 A1